# EUROPEAN PATENT APPLICATION

(11) **EP 4 513 949 A1**
(43) Date of publication of application: **26.02.2025**
(21) Application number: 22937897.1
(22) Date of filing: 21.04.2022
(51) Int. Cl.: H04W 24/10

(54) **METHOD AND APPARATUS FOR COMMUNICATION BETWEEN NETWORK DEVICE AND FORWARDER**

(71) Applicant: FUJITSU LIMITED, Kawasaki-shi, Kanagawa 211-8588 (JP)
(72) Inventor: JIANG, Qinyan, Beijing 100022 (CN); ZHANG, Lei, Beijing 100022 (CN)
(74) Representative: Haseltine Lake Kempner LLP
(86) International application number: PCT/CN2022/088313
(87) International publication number: WO 2023/201661

(57) **Abstract**

Embodiments of this disclosure provide a method and device for communication between a network device and a repeater. The device includes: a first receiving unit configured to receive first information from the network device; and/or, a first transmitting unit configured to transmit second information to the network device, wherein the repeater is identified by an identifier and/or a sequence.

## Description

### Technical Field

This disclosure relates to the field of communication technologies.

### Background

Compared with traditional 2G (second generation mobile communication technology), 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services. For this reason, a frequency band range/operating bandwidth supported by a 5G system is/are obviously higher than those of 2G, 3G and 4G systems, and the 5G system supports higher carrier frequencies. For example, a 5G system may be deployed in a millimeter waveband.

However, the higher a carrier frequency, the more severe a fading experienced by signals during transmission. Therefore, in actual deployment of a 5G system, especially in the millimeter waveband, how to better enhance cell coverage has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) relay/repeater to amplify and forward signals between it and a forwarding device is commonly used means of deployment. RF repeaters are widely used in actual deployment of 2G, 3G and 4G systems, with advantages that it is low in cost, easy in deployment and has no excessive latency. Generally speaking, an RF repeater is a device that amplifies and forwards signals between devices in the RF domain. That is, RF repeaters are non-regenerative type of relay nodes that simply amplify and forward all received signals directly.

A traditional RF repeater has no communication capability. That is, a traditional RF repeater is unable to exchange information with other devices (e.g. a base station/a terminal equipment, etc.) in amplifying/enhancing target signals. Specifically, in terms of reception, the traditional RF repeater does not support measuring/demodulating/decoding a forwarded signal, nor does it receive signals other than the forwarded signal. In terms of transmission, the traditional RF repeater only amplifies and forwards signals, and does not support generating signals or transmitting signals generated by itself.

Therefore, operation-related configurations (such as amplification gains, and antenna directions, etc.) of the traditional RF repeater are usually manually set or adjusted, and are unable to be adaptively and/or dynamically adjusted. For example, an antenna direction is usually manually set and adjusted during initial installation, so that an antenna at a base station side points towards a direction of an incoming wave of base station, and an antenna at a terminal side points towards an area where enhanced deployment is needed. For another example, an amplification gain is also set and adjusted during initial installation, so as to achieve an expected coverage enhancement effect as much as possible.

It was found by the inventors that using RF repeaters for coverage enhancement is one of feasible solutions to address coverage issues encountered in deployment of 5G systems. However, compared to 2G, 3G and 4G systems, 5G systems adopt the more advanced and complex MIMO (multiple input multiple output) technology. In a 5G system, especially for higher carrier frequencies, directional antennas have become basic components of base stations and terminal equipments. Transmitting and receiving signals based on beamforming technology is a fundamental signal transmission mode in the 5G system. An (analog) beam direction, and width, etc. of a base station and terminal equipment may dynamically change (i.e. beam switching) due to such factors as a position change, etc.

However, a direction of an antenna of a traditional RF repeater cannot be dynamically adjusted and beams thereof are relatively wide, and beam directions and beam widths of its transmit and receive antennas cannot flexibly match positions of base stations and terminal equipments and dynamic changes of the beam directions and widths of the transmit and receive antennas. If such an RF repeater is configured in a 5G system, on one hand, beam directions and widths of transmit and receive antennas of the RF repeater may not match dynamic changes of beam directions and widths of base stations and terminal equipments, resulting in insignificant performances and effects in amplifying or enhancing target signals. And on the other hand, using wider transmitting beams may possibly also cause significant interference to other devices (such as base stations or terminal equipments) within a relatively large range, leading to an increase in noise and interference levels throughout the system, thereby reducing network throughput.

In order to solve one or more of the above problems, on the one hand, the repeater may adjust the beam direction and/or width at the terminal side according to an instruction of the base station. On the other hand, in order to determine beams matching the terminal equipment and/or support beam calibration by the terminal equipment, the repeater may periodically or semi-persistently perform scanning or duplication on the beams at the terminal side according to the instruction of the base station. Thus, target signals may be amplified or enhanced as much as possible while reducing interference to other devices.

In order to achieve the above mode, it is needed that the repeater has a communication function. Embodiments of this disclosure provide a method and device for communication between a network device and a repeater, in which receiving (including at least one of detecting a sequence, demodulating, descrambling, decoding and interpreting) information transmitted by a network device, and/or transmitting (including at least one of generating information, generating sequences, scrambling, encoding, modulating, mapping to time-frequency resources, etc.) information to the network device, by a repeater, is/are supported.

According to a first aspect of the embodiments of this disclosure, there is provided a device for communication between a network device and a repeater, the device including: a first receiving unit configured to receive first information from the network device; and/or, a first transmitting unit configured to transmit second information to the network device, wherein the repeater is identified by an identifier and/or a sequence.

According to a second aspect of the embodiments of this disclosure, there is provided a device for communication between a network device and a repeater, the device including: a second transmitting unit configured to transmit first information to the repeater; and/or, a second receiving unit configured to receive second information from the repeater, wherein the repeater is identified by an identifier and/or a sequence.

According to a third aspect of the embodiments of this disclosure, there is provided a repeater, including the device as described in the first aspect of the embodiments of this disclosure.

According to a fourth aspect of the embodiments of this disclosure, there is provided a network device, including the device as described in the second aspect of the embodiments of this disclosure.

According to a fifth aspect of the embodiments of this disclosure, there is provided a communication system, including the repeater as described in the third aspect of the embodiments of this disclosure and/or the network device as described in the fourth aspect of the embodiments of this disclosure and a terminal equipment.

According to a sixth aspect of the embodiments of this disclosure, there is provided a method for communication between a network device and a repeater, the method including: receiving first information from the network device by the repeater; and/or, transmitting second information by the repeater to the network device, wherein the repeater is identified by an identifier and/or a sequence.

According to a seventh aspect of the embodiments of this disclosure, there is provided a method for communication between a network device and a repeater, the method including: transmitting first information to the repeater by the network device; and/or, receiving second information by the network device from the repeater, wherein the repeater is identified by an identifier and/or a sequence.

According to an eighth aspect of the embodiments of this disclosure, there is provided a computer readable program, which, when executed in a device for communication between a network device and a repeater or a repeater, will cause the device for communication between a network device and a repeater or the repeater to carry out the method for communication between a network device and a repeater described in the sixth aspect of the embodiments of this disclosure.

According to a ninth aspect of the embodiments of this disclosure, there is provided a computer readable medium, including a computer readable program, which will cause a device for communication between a network device and a repeater or a repeater to carry out the method for communication between a network device and a repeater described in the sixth aspect of the embodiments of this disclosure.

According to a tenth aspect of the embodiments of this disclosure, there is provided a computer readable program, which, when executed in a device for communication between a network device and a repeater or a network device, will cause the device for communication between a network device and a repeater or the network device to carry out the method for communication between a network device and a repeater described in the seventh aspect of the embodiments of this disclosure.

According to an eleventh aspect of the embodiments of this disclosure, there is provided a computer readable medium, including a computer readable program, which will cause a device for communication between a network device and a repeater or a network device to carry out the method for communication between a network device and a repeater described in the seventh aspect of the embodiments of this disclosure.

An advantage of the embodiments of this disclosure exists in that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of an embodiment of this disclosure;
FIG. 2 is a schematic diagram of performing communication by using beams in a current system;
FIG. 3 is a schematic diagram of a use scenario of an embodiment of this disclosure;
FIG. 4 is a schematic diagram of performing communication by using beams in a system in an embodiment of this disclosure;
FIG. 5 is a logical schematic diagram of a repeater of an embodiment of this disclosure;
FIG. 6 is a schematic diagram of the method for communication between a network device and a repeater of Embodiment 1 of this disclosure;
FIG. 7 is a schematic diagram of a method for acquiring an identifier and/or a sequence by the repeater of Embodiment 1 of this disclosure;
FIG. 8 is an information exchange view of the method for acquiring an identifier and/or a sequence by the repeater of Embodiment 1 of this disclosure;
FIG. 9 is a schematic diagram of another method for acquiring an identifier and/or a sequence by the repeater of Embodiment 1 of this disclosure;
FIG. 10 is an information exchange view of the other method for acquiring an identifier and/or a sequence by the repeater of Embodiment 1 of this disclosure;
FIG. 11 is a schematic diagram of a further method for acquiring an identifier and/or a sequence by the repeater of Embodiment 1 of this disclosure;
FIG. 12 is an information exchange view of the further method for acquiring an identifier and/or a sequence by the repeater of Embodiment 1 of this disclosure;
FIG. 13 is a schematic diagram of a method for providing an identifier and/or a sequence by the repeater of Embodiment 1 of this disclosure;
FIG. 14 is an information exchange view of the method for providing an identifier and/or a sequence by the repeater of Embodiment 1 of this disclosure;
FIG. 15 is a schematic diagram of another method for providing an identifier and/or a sequence by the repeater of Embodiment 1 of this disclosure;
FIG. 16 is an information exchange view of the other method for providing an identifier and/or a sequence by the repeater of Embodiment 1 of this disclosure;
FIG. 17 is another schematic diagram of the method for communication between a network device and a repeater of Embodiment 1 of this disclosure;
FIG. 18 is a schematic diagram of a process for carrying control information by a physical channel of Embodiment 1 of this disclosure;
FIG. 19 is a schematic diagram of the method for communication between a network device and a repeater of Embodiment 2 of this disclosure;
FIG. 20 is a schematic diagram of a method for providing an identifier and/or a sequence by the network device to the repeater of Embodiment 2 of this disclosure;
FIG. 21 is a schematic diagram of another method for providing an identifier and/or a sequence by the network device to the repeater of Embodiment 2 of this disclosure;
FIG. 22 is a schematic diagram of a further method for providing an identifier and/or a sequence by the network device to the repeater of Embodiment 2 of this disclosure;
FIG. 23 is a schematic diagram of a method for acquiring an identifier and/or a sequence by the network device from the repeater of Embodiment 2 of this disclosure;
FIG. 24 is a schematic diagram of another method for acquiring an identifier and/or a sequence by the network device from the repeater of Embodiment 2 of this disclosure;
FIG. 25 is a schematic diagram of the device for communication between a network device and a repeater of Embodiment 3 of this disclosure;
FIG. 26 is a schematic diagram of the device for communication between a network device and a repeater of Embodiment 4 of this disclosure;
FIG. 27 is a block diagram of a systematic structure of repeater of Embodiment 5 of this disclosure; and
FIG. 28 is a schematic diagram of a systematic structure of the network device of Embodiment 6 of this disclosure.

### Detailed Description

These and further aspects and features of this disclosure will be apparent with reference to the following description and attached drawings. In the description and drawings, particular embodiments of this disclosure have been disclosed in detail as being indicative of some of the ways in which the principles of this disclosure may be employed, but it is understood that this disclosure is not limited correspondingly in scope. Rather, this disclosure includes all changes, modifications and equivalents coming within the terms of the appended claims.

In the embodiments of this disclosure, terms "first", and "second", etc. are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc. include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, "multiple" or "multiple types of" refers to at least two (two or more than two) or at least two types.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc. and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DU is a logical node of the gNB having a part of functions of the gNB. And the term "cell" may refer to a base station and/or its coverage area, depending on a context of the term. A gNB-DU supports one or more cells, and a cell is supported by one gNB-DU.

In the embodiments of this disclosure, the term "user equipment (UE)" or "terminal equipment (TE)" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The user equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc. the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "a repeater" is a relay device, such as a relay device provided in a serving cell to which a network device corresponds, which is used to forward transmission signals between the network device and terminal equipments. In addition, it may be referred to as a repeater node.

Scenarios of the embodiments of this disclosure and problems shall be described below by way of examples; however, this disclosure is not limited thereto.

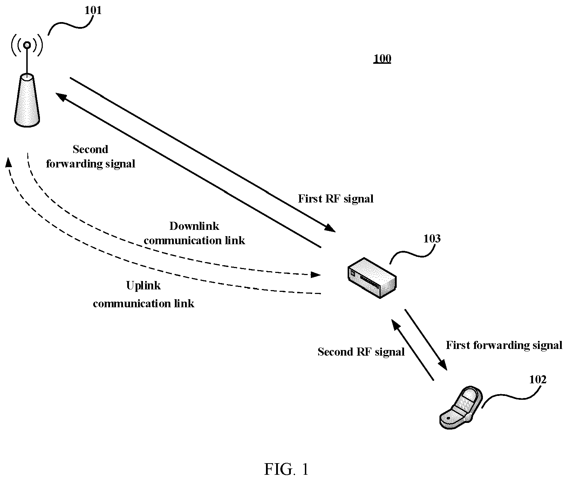

FIG. 1 is a schematic diagram of a communication system of this disclosure. As shown in FIG. 1, a communication system 100 may include a network device 101, a terminal equipment 102 and a repeater 103.

In the embodiments of this disclosure, existing traffics or traffics that may be implemented in the future may be performed between the network device 101 and the terminal equipment 102. For example, such traffics may include but not limited to enhanced mobile broadband (eMBB), massive machine type communication (MTC), and ultra-reliable and low-latency communication (URLLC), etc.

As shown in FIG. 1, the repeater 103 receives a first RF signal from the network device 101, amplifies the signal to obtain a first forwarding signal and transmits it to the terminal equipment 102, and/or, the repeater 103 receives a second RF signal from the terminal equipment 102, amplifies the signal to obtain a second forwarding signal and transmits it to the network device 101.

In addition, as shown in FIG. 1, communication between the repeater 103 and the network device 101 may be performed via a downlink communication link (or a downlink control link) (down C-link) and/or an uplink communication link (or an uplink control link) (up C-link). The repeater 103 may possibly only support some of the links shown in FIG. 1. For example, for communication links, the repeater supports at least a downlink communication link, and for forwarding links, it supports at least one of uplink and downlink.

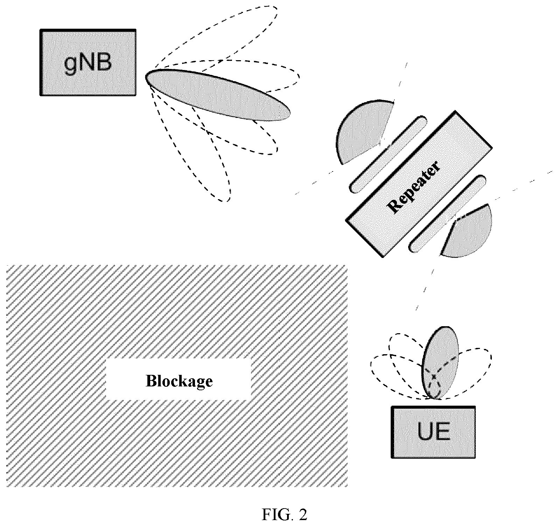

FIG. 2 is a schematic diagram of performing communication by using beams in a current system. As shown in FIG. 2, in the current communication system using a repeater, the repeater uses a wider beam and a direction of an antenna thereof is fixed. Therefore, beam directions and beam widths of transmit and receive antennas the repeater of transmit and receive antennas may possibly not match dynamic changes in beam directions and beam widths of a gNB as a network device and a UE as a terminal equipment, which may result in insignificant performances and effects of amplifying or enhancing target signals. And on the other hand, using wider transmitting beams by the repeater may possibly also cause significant interference to other devices (such as base stations or terminal equipments) within a relatively large range, leading to an increase in noise and interference levels throughout the system, thereby reducing network throughput.

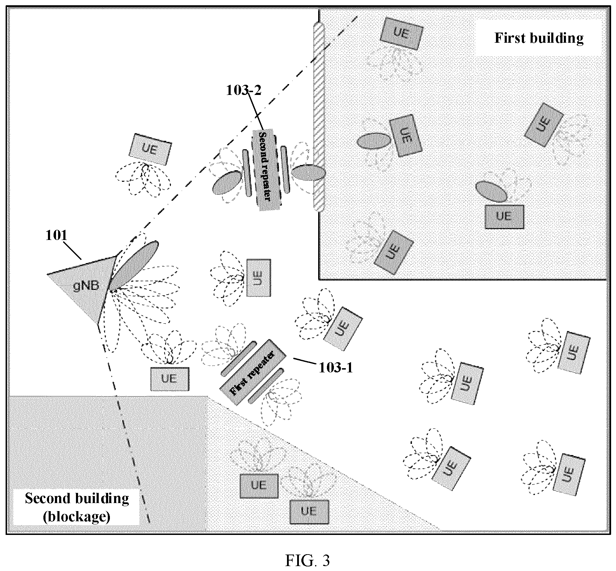

FIG. 3 is a schematic diagram of a use scenario of an embodiment of this disclosure. As shown in FIG. 3, multiple repeaters, i.e. a first repeater 103-1 and a second repeater 103-2, are deployed under gNB 101 as a network device, and serve for different UEs.

In this scenario, information transmission and/or reception between the network device and the repeaters may possibly need to be specific to the repeaters or common to the multiple repeaters. For example, following communication modes need to be supported:
Information transmitted by the network device (such as control information, etc.) may be specific to one repeater (that is, the information is repeater-specific/dedicated) or multiple repeaters (that is, the information is group common to multiple repeaters). For the convenience of subsequent description, a repeater targeted by a piece of information is referred to as a target repeater, which is able to receive and determine whether all or a part of the information is targeted to it, and/or is able to determine which part of the information is targeted to it. A non-target repeater is unable to receive the information, or is able to receive the information and determine that the information is not targeted to it. For example, a repeater transmits information (such as response information for control information, measurement reporting information, triggering information, request information, and acknowledgement information (such as ACK/NACK), etc.) to a network device, and the network device is able to receive the information and determine that the information is from the repeater.

For example, as shown in FIG. 3, information transmitted by the gNB 101 may be targeted to the second repeater 103-2, and the second repeater 103-2 is able to receive the information and determine that all or a part of the information is targeted to the second repeater 103-2, and/or is able to determine which part of the information is targeted to the second repeater 103-2. The first repeater 103-1 is unable to receive the information, or receives (such as including at least one of detecting sequences, demodulating, descrambling, decoding, and interpreting, etc.) and is able to determine that the information is not directed the first repeater 103-1. For another example, the information transmitted by gNB 101 may be targeted to the first repeater 103-1 and the second repeater 103-2, and the first repeater 103-1 and the second repeater 103-2 are able to receive the information and determine parts of the information to which they correspond respectively. For a further example, the second repeater 103-2 transmits information to the gNB 101, and the gNB 101 is able to receive the information and determine that the information is from the second repeater 103-2.

Current mechanisms are unable to support the above communication modes.

Various implementations of the embodiments of this disclosure shall be described below with reference to the accompanying drawings. These implementations are illustrative only, and are not intended to limit this disclosure.

### Embodiment 1

The embodiment of this disclosure provides a method for communication between a network device and a repeater, applicable to a repeater.

In the embodiments of this disclosure, the repeater has a communication function, and is able to receive information from a network device and/or transmit information to the network device.

In the embodiments of this disclosure, the receiving includes at least one of detecting sequences, demodulating, descrambling, decoding, and interpreting information, etc.

In the embodiments of this disclosure, the transmitting includes at least one of generating information, generating sequences, scrambling, encoding, modulating, and mapping to time-frequency resources, etc.

In the embodiments of this disclosure, the generating sequences includes scrambling (action) sequences. Or, the generating sequences does not include scrambling sequences, and the scrambling sequences is a step following the generating sequences, or vice versa, that is, the generating sequences is a step following the scrambling sequences.

For example, the repeater is able to at least receive control information from the network device.

In the embodiments of this disclosure, the control information is used to indicate beams of a terminal equipment side of the repeater (such as indicating a beam direction and/or width adopted at a terminal side of the repeater, and/or indicating that the repeater periodically or semi-persistently performs scanning or duplication on a terminal side beam), and/or is used to indicate transmit power of the repeater, and/or is used to indicate an amplification gain of the repeater, and/or is used to indicate a forwarding direction of the repeater (e.g. downlink forwarding or uplink forwarding).

In the embodiments of this disclosure, the repeater may be referred to as a network-controlled repeater (NC repeater). However, other names may also be used, and names of the repeater are not intended to limit the embodiment of this disclosure.

In the embodiments of this disclosure, the repeater includes a communication module (which may also be referred to as an MT module) and a forwarding module (which may also be referred to as an RU module), wherein the communication module is used to support its a communication function (such as receiving and/or transmitting information described above) between it and the network device, and the forwarding module is used to support its amplification and forwarding functions. In the embodiments of this disclosure, the communication module may control the forwarding module.

In the embodiments of this disclosure, a link between the network device and the communication module is a communication link or a control link. The communication module of the repeater may receive information from the network device via the communication link or control link, and the communication link or control link may be based on an existing Uu interface. In addition, the communication module of the repeater may apply the information received from the network device to the forwarding module through internal operations of the repeater.

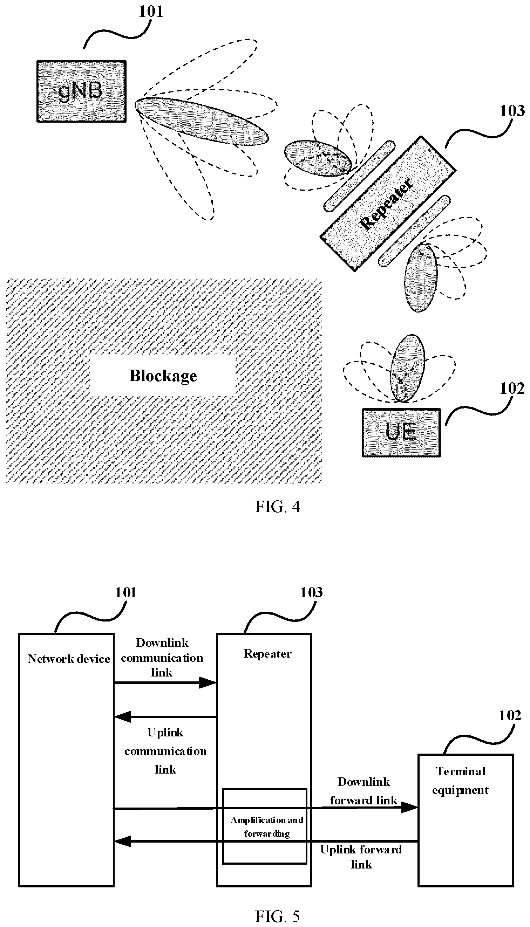

FIG. 4 is a schematic diagram of performing communication by using beams in a system In the embodiments of this disclosure. As shown in FIG. 4, the repeater 103 uses beams controlled by the gNB 101 as a network device to amplify and forward signals between the gNB 101 and a UE 102 as a terminal equipment.

FIG. 5 is a logical schematic diagram of the repeater In the embodiments of this disclosure. As shown in FIG. 5, in a downlink forwarding link (down F-link) and an uplink forwarding link (up F-link), the repeater 103 amplifies and forwards signals between the network device 101 and the terminal equipment 102. In addition, for example, communication between the repeater 103 and the network device 101 may also be performed via a downlink communication link (or downlink control link) (down C-link ) and/or an uplink communication link (or uplink control link) (up C-link). The repeater may possibly only support some of the links shown in FIG. 5. For example, for communication links, the repeater supports at least a downlink communication link, and for forwarding links, it supports at least one of uplink and downlink.

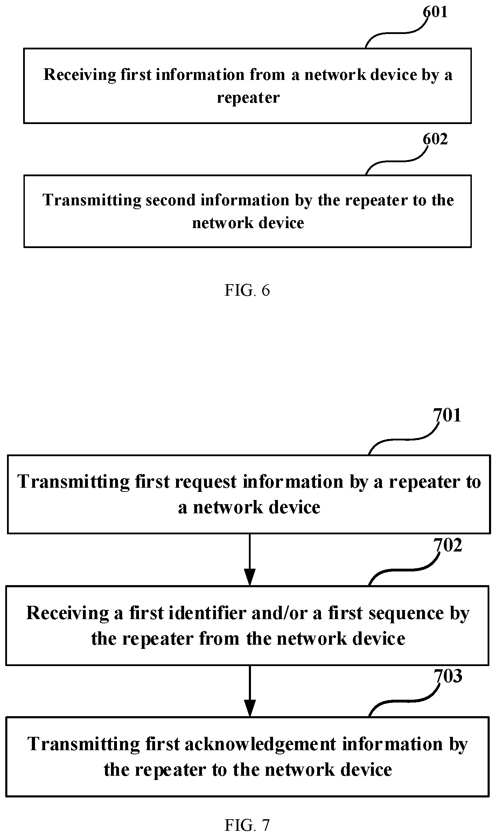

FIG. 6 is a schematic diagram of the method for communication between a network device and a repeater of Embodiment 1 of this disclosure. As shown in FIG. 6, the method includes:
step 601: receiving first information from a network device by a repeater; and/or,
step 602: transmitting second information by the repeater to the network device,
wherein the repeater is identified by an identifier and/or a sequence.

In the embodiments of this disclosure, the method may include at least one of steps 601 and 602. Additionally, when the method includes steps 601 and 602, an order of execution of steps 601 and 602 is not restricted. Furthermore, steps 601 and 602 may be associated, or may not be associated.

In this way, by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

For example, the repeater is identified by a specific/dedicated identifier and/or sequence.

For example, according to the identifier and/or sequence, as shown in FIG. 3, the information transmitted by the network device 101 may be targeted to the first repeater 103-1, and the first repeater 103-1 may receive the information and determine that all or a part of the information is targeted to it, and/or, the first repeater 103-1 may determine which part of the information is targeted to it. And the second repeater 103-2 is unable to receive the information, or it may receive the information and determine that the information is not targeted totargeted to it.

For another example, according to the identifier and/or sequence, the first repeater 103-1 transmits information to the network device 101, and the network device 101 may receive the information and determine that the information is from the first repeater 103-1.

In the embodiments of this disclosure, the identifier and/or sequence used to identify the repeater include(s) one or more identifiers and/or sequences.

In the embodiments of this disclosure, the identifier and/or sequence may include at least one of a preconfigured identifier and/or sequence, a predefined identifier and/or sequence and an identifier and/or sequence configured or indicated via signaling. That is, the identifier and/or the sequence or a part thereof may be at least one of preconfigured, predefined, or signaling-configured (which may also referred to as "indicated") identifiers and/or the sequences.

For example, the preconfigured identifier and/or sequence is/are also referred to a preset identifier and/or sequence.

In the embodiments of this disclosure, the identifier and/or the sequence include(s) at least one of the following identifiers and/or sequences:
a unique identifier and/or sequence under a network device (or cell), that is, the identifier and/or the sequence is/are used to uniquely identify a repeater under a network device, such as identifying different repeaters under a network device by different numbers;
a unique identifier and/or sequence within a network, that is, the identifier and/or the sequence is used to uniquely identify a repeater in the network, for example, the network is an access network or a core network; and
a preset identifier and/or sequence, such as an ex-works preset identifier and/or sequence, such as a global identifier.

In the embodiments of this disclosure, the identifier includes a network device identifier and/or a terminal equipment identifier.

For example, the identifier may include a cell global identifier (CGI) and/or a cell-radio network temporary identifier (C-RNTI), etc.

The identifier and/or the sequence is targeted to at least one of a physical layer (PHY layer), an MAC layer and an RRC layer.

In the embodiments of this disclosure, the entire or a part of the identifier and/or the sequence is/are used to support functions of at least one of the physical layer, the MAC layer and the RRC layer.

That is, that the identifier and/or sequence is/are targeted to a certain layer refers to that the identifier and/or sequence is/are used to support functions of the layer. For example, in some processing of the layer, the entire or a part of the identifier and/or the sequence is/are needed, such as determining a part of an identifier based on binary, and hexadecimal, etc., such as by using two binary lowest bits of the C-RNTI.

For example, that the identifier and/or sequence is/are targeted to the physical layer refers to that the identifier and/or sequence is/are used to support functions of the physical layer, for example, the identifier and/or sequence is/are used for information scrambling.

For example, that the identifier and/or sequence is/are targeted to the MAC layer refers to that the identifier and/or sequence is/are used to support functions of the MAC layer, such as including the identifier and/or sequence in the MAC CE.

In the embodiments of this disclosure, the identifier and/or sequence may be acquired by the repeater from the network device, or may be provided by the repeater to the network device.

The two cases shall respectively be described below in detail.

The case where the repeater acquires the identifier and/or sequence from the network device shall be described first.

FIG. 7 is a schematic diagram of a method for acquiring an identifier and/or a sequence by the repeater of Embodiment 1 of this disclosure. As shown in FIG. 7, the method includes:
step 701: transmitting first request information by a repeater to a network device;
step 702: receiving a first identifier and/or a first sequence by the repeater from the network device; and
step 703: transmitting first acknowledgement information by the repeater to the network device.

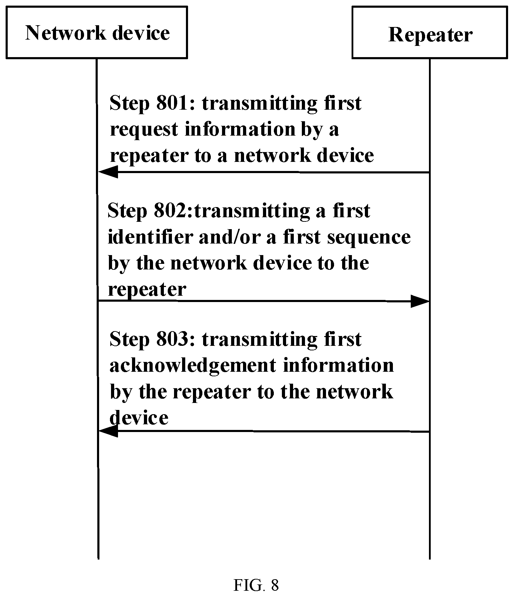

FIG. 8 is an information exchange view of the method for acquiring an identifier and/or a sequence by the repeater of Embodiment 1 of this disclosure. As shown in FIG. 8, the method includes:
step 801: transmitting first request information by a repeater to a network device;
step 802: transmitting a first identifier and/or a first sequence by the network device to the repeater; and
step 803: transmitting first acknowledgement information by the repeater to the network device.

In the embodiments of this disclosure, the first identifier and/or the first sequence is/are used to identify the repeater.

In the embodiments of this disclosure, steps 703 and 803 are optional.

In the embodiments of this disclosure, the first request information is a preamble or Msg A.

In the embodiments of this disclosure, the first identifier and/or the first sequence is Msg. 2 or an RAR or a Msg B.

In the embodiments of this disclosure, the first acknowledgement information is ACK or NACK.

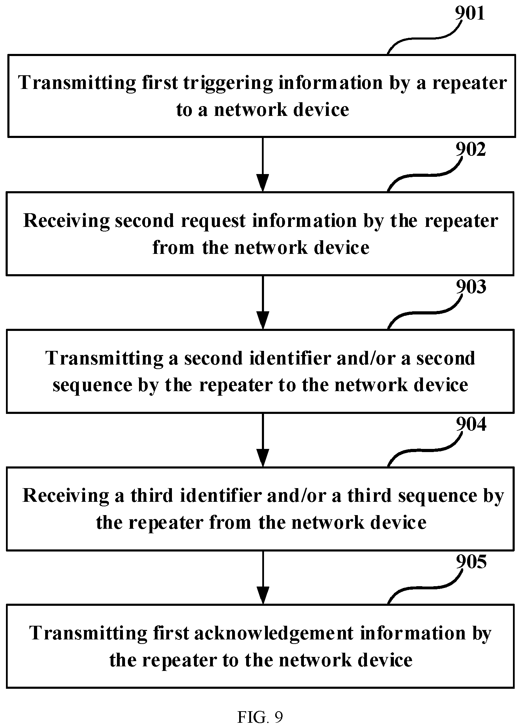

FIG. 9 is a schematic diagram of another method for acquiring an identifier and/or a sequence by the repeater of Embodiment 1 of this disclosure. As shown in FIG. 9, the method includes:
step 901: transmitting first triggering information by a repeater to a network device;
step 902: receiving second request information by the repeater from the network device;
step 903: transmitting a second identifier and/or a second sequence by the repeater to the network device;
step 904: receiving a third identifier and/or a third sequence by the repeater from the network device; and
step 905: transmitting first acknowledgement information by the repeater to the network device.

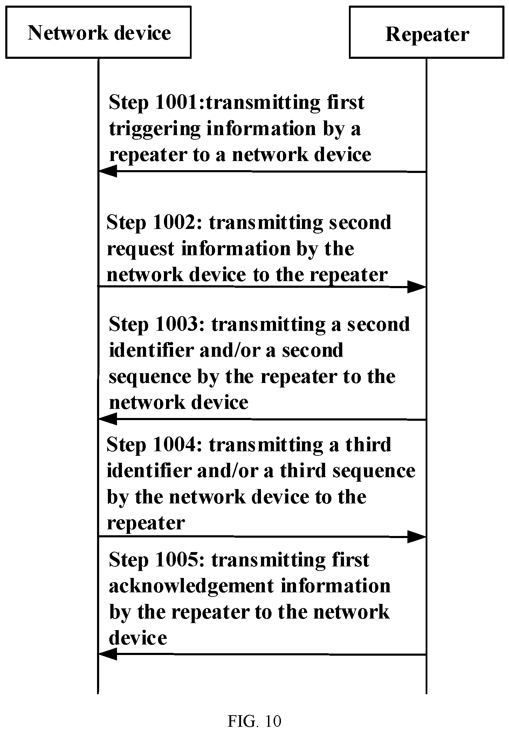

FIG. 10 is an information exchange view of the other method for acquiring an identifier and/or a sequence by the repeater of Embodiment 1 of this disclosure. As shown in FIG. 10, the method includes:
step 1001: transmitting first triggering information by a repeater to a network device;
step 1002: transmitting second request information by the network device to the repeater;
step 1003: transmitting a second identifier and/or a second sequence by the repeater to the network device;
step 1004: transmitting a third identifier and/or a third sequence by the network device to the repeater; and
step 1005: transmitting first acknowledgement information by the repeater to the network device.

In the embodiments of this disclosure, steps 905 and 1005 are optional.

In the embodiments of this disclosure, the first triggering information is a preamble or Msg A.

In the embodiments of this disclosure, the second request information is Msg.2 or an RAR or MsgB. For example, the second request information includes uplink resource allocation information and a preamble ID.

In the embodiments of this disclosure, the second identifier and/or second sequence transmitted by the repeater to the network device is/are, for example, an identifier of the repeater its own, such as a part of a factory ID or global ID.

In the embodiments of this disclosure, the third identifier and/or third sequence transmitted by the network device to the repeater is/are different from the second identifier and/or second sequence. Additionally, when the third identifier and/or third sequence is/are transmitted, the second identifier and/or second sequence may be transmitted together, so that the repeater may determine that the third identifier and/or third sequence is/are transmitted to it.

In the embodiments of this disclosure, the second identifier and/or the second sequence and/or the third identifier and/or the third sequence is/are used to identify the repeater.

In the embodiments of this disclosure, the first acknowledgement information is ACK or NACK.

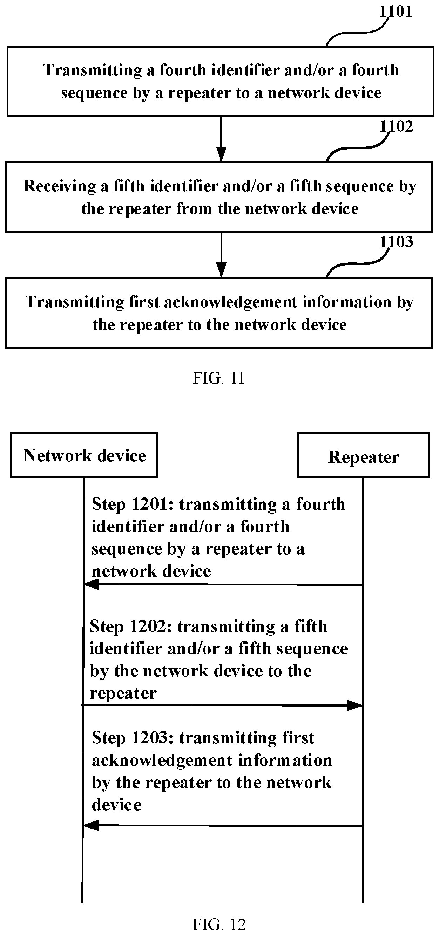

FIG. 11 is a schematic diagram of a further method for acquiring an identifier and/or a sequence by the repeater of Embodiment 1 of this disclosure. As shown in FIG. 11, the method includes:
step 1101: transmitting a fourth identifier and/or a fourth sequence by a repeater to anetwork device;
step 1102: receiving a fifth identifier and/or a fifth sequence by the repeater from the network device; and
step 1103: transmitting first acknowledgement information by the repeater to the network device.

FIG. 12 is an information exchange view of the further method for acquiring an identifier and/or a sequence by the repeater of Embodiment 1 of this disclosure. As shown in FIG. 12, the method includes:
step 1201: transmitting a fourth identifier and/or a fourth sequence by a repeater to a network device;
step 1202: transmitting a fifth identifier and/or a fifth sequence by the network device to the repeater; and
step 1203: transmitting first acknowledgement information by the repeater to the network device.

In the embodiments of this disclosure, steps 1103 and 1203 are optional.

In the embodiments of this disclosure, the fourth identifier and/or the fourth sequence is/are a preamble/preambles or Msg A.

In the embodiments of this disclosure, the fourth identifier and/or the fourth sequence is/are carried by PUSCH(s) in the preamble(s) or Msg A.

In the embodiments of this disclosure, the fourth identifier and/or the fourth sequence transmitted by the repeater to the network device is/are, for example, an identifier of the repeater its own, such as a part of a factory ID or global ID.

In the embodiments of this disclosure, the fifth identifier and/or the fifth sequence is/are Msg.2 or an RAR/RARs or MsgB.

In the embodiments of this disclosure, the fifth identifier and/or fifth sequence transmitted by the network device to the repeater is/are different from the fourth identifier and/or fourth sequence. Additionally, when the fifth identifier and/or fifth sequence is/are transmitted, the fourth identifier and/or fourth sequence may be transmitted together, so that the repeater may determine that the fifth identifier and/or fifth sequence is/are transmitted to it.

In the embodiments of this disclosure, the fourth identifier and/or fourth sequence and/or the fifth identifier and/or fifth sequence is/are used to identify the repeater.

In the embodiments of this disclosure, the first acknowledgement information is ACK or NACK.

The case where the repeater acquires the identifiers and/or the sequences from the network device is described above. A case where the repeater provides or informs or reports identifiers and/or sequences to the network device shall be described below.

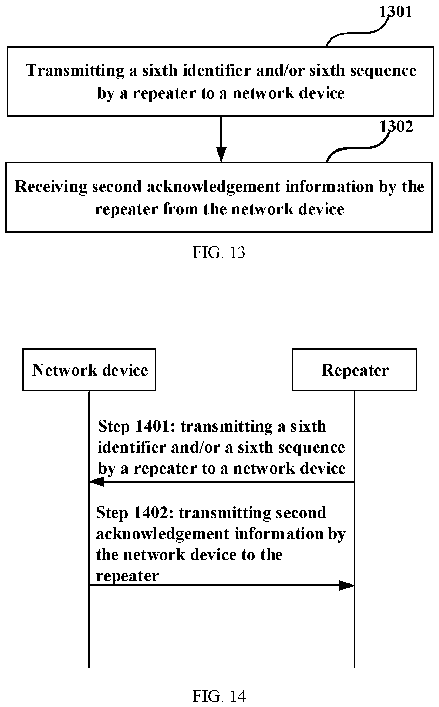

FIG. 13 is a schematic diagram of a method for providing an identifier and/or a sequence by the repeater of Embodiment 1 of this disclosure. As shown in FIG. 13, the method includes:
step 1301: transmitting a sixth identifier and/or sixth sequence by a repeater to a network device; and
step 1302: receiving second acknowledgement information by the repeater from the network device.

FIG. 14 is an information exchange view of the method for providing an identifier and/or a sequence by the repeater of Embodiment 1 of this disclosure. As shown in FIG. 14, the method includes:
step 1401: transmitting a sixth identifier and/or a sixth sequence by a repeater to a network device; and
step 1402: transmitting second acknowledgement information by the network device to the repeater.

In the embodiments of this disclosure, steps 1302 and 1402 are optional.

In the embodiments of this disclosure, the sixth identifier and/or the sixth sequence is/are a preamble/preambles or Msg A.

In the embodiments of this disclosure, the sixth identifier and/or the sixth sequence is/are carried by PUSCH(s) in the preamble(s) or Msg A.

In the embodiments of this disclosure, the sixth identifier and/or sixth sequence is/are used to identify the repeater.

In the embodiments of this disclosure, the second acknowledgement information is/are Msg.2 or an RAR/RARs or MsgB.

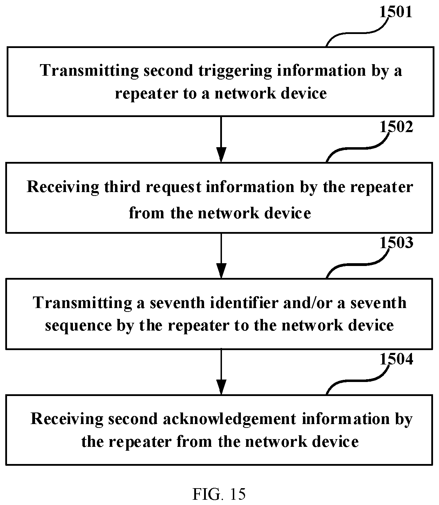

FIG. 15 is a schematic diagram of another method for providing an identifier and/or a sequence by the repeater of Embodiment 1 of this disclosure. As shown in FIG. 15, the method includes:
step 1501: transmitting second triggering information by a repeater to a network device;
step 1502: receiving third request information by the repeater from the network device;
step 1503: transmitting a seventh identifier and/or a seventh sequence by the repeater to the network device; and
step 1504: receiving second acknowledgement information by the repeater from the network device.

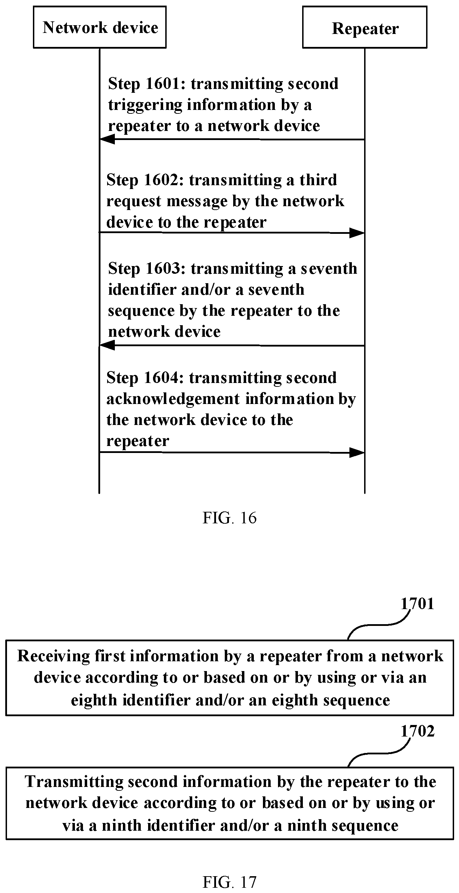

FIG. 16 is an information exchange view of the other method for providing an identifier and/or a sequence by the repeater of Embodiment 1 of this disclosure. As shown in FIG. 16, the method includes:
step 1601: transmitting second triggering information by a repeater to a network device;
step 1602: transmitting a third request message by the network device to the repeater;
step 1603: transmitting a seventh identifier and/or a seventh sequence by the repeater to the network device; and
step 1604: transmitting second acknowledgement information by the network device to the repeater.

In the embodiments of this disclosure, steps 1504 and 1604 are optional.

In the embodiments of this disclosure, the second triggering information is a preamble or Msg A.

In the embodiments of this disclosure, the seventh identifier and/or the seventh sequence is a sequence or a physical channel.

In the embodiments of this disclosure, the second acknowledgement information is ACK or NACK.

In the embodiments of this disclosure, in relevant steps in FIGs. 7-16, contents included in the PUSCH of Msg A or the RAR or Msg B are defined for the repeater, or contents defined for the terminal equipment are reused.

That is, the contents included in the PUSCH of Msg A or the RAR or Msg B are different from or identical to the contents defined for the terminal equipment.

In the embodiments of this disclosure, when the contents included in the PUSCH of Msg A or the RAR or Msg B reuse contents defined for the terminal equipment, for the information received by the repeater, the repeater reads a part of information fields of the information and ignores the other information fields; and for the information transmitted by the repeater, the repeater fills a part of information fields with default bits (such as 0), and fills other information fields as needed.

In step 601, the repeater receives first information from the network device; and in step 602, the repeater transmits second information to the network device.

In the embodiments of this disclosure, the first information is referred to as downlink information, and the second information is referred to as uplink information.

In the embodiments of this disclosure, the first information is generated according to the identifier and/or the sequence of the repeater, and/or the first information is scrambled according to the identifier and/or the sequence of the repeater.

For example, the network device generate the first information according to the identifier and/or sequence of the repeater, and/or the network device scrambles the first information according to the identifier and/or sequence of the repeater.

In the embodiments of this disclosure, the first information is received (such as including at least one of detecting sequences, demodulating, descrambling, decoding and interpreting) according to the identifier and/or the sequence of the repeater.

For example, the repeater receives (such as including at least one of detecting sequences, demodulating, descrambling, decoding, and interpreting, etc.) the first information according to the identifier and/or the sequence of the repeater.

In the embodiments of this disclosure, the second information is generated according to the identifier and/or the sequence of the repeater, and/or the second information is scrambled according to the identifier and/or the sequence of the repeater.

For example, the repeater generates the second information according to the identifier and/or sequence of the repeater, and/or the network device scrambles the second information according to the identifier and/or sequence of the repeater.

In the embodiments of this disclosure, the second information is transmitted according to the identifier and/or the sequence of the repeater.

For example, the repeater transmits (such as including at least one of generating information, generating sequences, scrambling, encoding, modulating, and mapping to time-frequency resources, etc.) the second information according to the identifier and/or the sequence of the repeater.

FIG. 17 is another schematic diagram of the method for communication between a network device and a repeater of Embodiment 1 of this disclosure. As shown in FIG. 17, the method includes:
step 1701: receiving first information by a repeater from a network device according to or based on or by using or via an eighth identifier and/or an eighth sequence; and/or,
step 1702: transmitting second information by the repeater to the network device according to or based on or by using or via a ninth identifier and/or a ninth sequence.

Wherein, the repeater is identified by an identifier and/or a sequence, the identifier and/or the sequence including the eighth identifier and/or eighth sequence, and/or a ninth identifier and/or a ninth sequence.

In the embodiments of this disclosure, the method may include at least one of step 1701 and step 1702. Additionally, when the method includes step 1701 and step 1702, an order of execution of step 1701 and step 1702 is not restricted. Furthermore, step 1701 and step 1702 may be associated, or may not be associated.

In the embodiments of this disclosure, the eighth identifier and/or the eighth sequence may be identical to or different from the ninth identifier and/or the ninth sequence. For different cases,
for example, a method for acquiring the eighth identifier and/or the eighth sequence may be different from that for acquiring the ninth identifier and/or the ninth sequence, that is, they may be acquired in different modes, such as methods that are preconfigured, predefined, configured via signaling, or indicated.

For example, signaling indicated by the eighth identifier and/or eighth sequence is different from that indicated by the ninth identifier and/or ninth sequence.

For another example, a value/values of the eighth identifier and/or eighth sequence is/are different from that/those of the ninth identifier and/or ninth sequence.

A purpose/purposes of the identifier and/or sequence used to identify the repeater shall be described below in detail.

In the embodiments of this disclosure, the identifier and/or sequence is/are used for at least one piece of the following processing:
(1) Scrambling the first information and/or the second information carried by the physical channel.

In the embodiments of this disclosure, the scrambling includes scrambling CRC bits and/or scrambling channel-encoded bits. In the embodiments of this disclosure, the first information and/or the second information is/are at least one of control information, response information, measurement reporting information, triggering information, request information and acknowledgement information.

For example, the response information is response information of the control information.

For example, the control information is uplink control information and/or downlink control information, and the response information is downlink response information.

(2) Generating and/or scrambling a reference signal of the physical channel.

In the embodiments of this disclosure, the physical channel includes an uplink physical channel and/or a downlink physical channel.

In the embodiments of this disclosure, the reference signal is, for example, a demodulation reference signal (DMRS).

In the embodiments of this disclosure, for example, a sequence of the reference signal of the physical channel is generated and/or scrambled based on a cell ID and the identifier and/or sequence of the repeater, such as being generated and/or scrambled based on the cell ID and a repeater ID; or,
a sequence of the reference signal of the physical channel is generated based on the cell ID, and is scrambled based on the identifier and/or the sequence of the repeater, such as being generated based on the cell ID, and is scrambled based on a repeater ID; or,
a sequence of the reference signal of the physical channel is generated based on the identifier and/or the sequence of the repeater, and is scrambled based on the cell ID, such as being generated based on a repeater ID, and is scrambled based on the cell ID.

(3) Generating and/or scrambling a sequence carrying information.

In the embodiments of this disclosure, the sequence carrying information is generated and/or scrambled based on the identifier and/or sequence of the repeater and a beam ID of the terminal equipment side or a fronthaul link of the repeater.

For example, the sequence carrying information is generated and/or scrambled based on the repeater ID and IDs or indices of the beams of the terminal equipment side or fronthaul link of the repeater.

In the embodiments of this disclosure, the sequence carrying information is generated and/or scrambled according to the cell identifier, the identifier and/or sequence of the repeater, and the beam identifier (beam ID) of the terminal equipment side or fronthaul link of the repeater.

For example, the sequence carrying information is generated and/or scrambled based on the cell ID, the repeater ID, and the IDs or indices of the beams of the terminal equipment side or fronthaul link of the repeater.

In the embodiments of this disclosure, the beams of the terminal equipment side of the repeater include a receive beam and/or a transmit beam. The transmit beam is used to transmit signals to the terminal equipment, and the receive beam is used to receive signals transmitted by the terminal equipment.

For example, if the repeater only has a downlink forwarding link, the beams of the terminal equipment side of the repeater only need to include a transmit beam, and if the repeater only has an uplink forwarding link, the beams of the terminal equipment side of the repeater only need to include a receive beam.

In the embodiments of this disclosure, the transmit beam and the receive beam correspond to each other one by one. In the embodiments of this disclosure, an ID or index of the beams of the terminal equipment side of the repeater is an SSB index or a CSI-RS ID or a number specific for the repeater.

In the embodiments of this disclosure, a sequence is generated and/or scrambled based on the SSB index, the CSI-RS ID and other numbers specific for the repeater, so as to indicate the beams of the terminal equipment side of the repeater.

In the embodiments of this disclosure, for the SSB index and the CSI-RS ID, one SSB index or CSI-RS ID is used to refer to a transmit beam and/or a receive beam.

In the embodiments of this disclosure, for the number specific for the repeater, for example, the beams of the repeater terminal equipment side are numbered as 0-3 (assuming that there are total 4 beams). For a case where the beams of the terminal equipment side of the repeater include receive beams and the transmit beams, the receive beams and the transmit beams are numbered separately or in a combined manner.

It is assumed that there are 4 receive beams and 4 transmit beams,

For example, the receive beams and the transmit beams may be numbered separately, such as numbering the receive beams and the transmit beams as 0-3 respectively.

For another example, the receive beams and the transmit beams may be numbered in a combined manner, such as numbering the receive beams and the transmit beams as 0-7 respectively; or, a pair of transmit beam and receive beam use the same number, that is, 4 pairs of transmit beams and receive beams are numbered as 0-3 respectively.

(4) Generating and/or scrambling a preamble sequence/preamble sequences of the first information and/or the second information; and/or, generating and/or scrambling a preamble sequence/preamble sequences of channel(s) or sequence(s) carrying the first information and/or the second information.

In the embodiments of this disclosure, the preamble sequence(s) is/are used to indicate repeater(s) to which the first information and/or the second information is/are directed.

In the embodiments of this disclosure, the preamble sequence(s) is/are a DMRS sequence/DMRS sequences of a physical channel/physical channels. That is, the preamble sequence(s) is/are not excluded from being a DMRS sequence/DMRS sequences of a physical channel/physical channels.

(5) Indicating repeater(s) to which the first information and/or the second information is/are directed in the first information and/or the second information or indicating that a part of information in the first information and/or the second information is targeted to a specific repeater.

In the embodiments of this disclosure, assuming that multiple repeaters under the network device may receive or decode or interpret the first information, a repeater to which the information is targeted or a repeater to which a part of the information is targeted is indicated in the first information.

In the embodiments of this disclosure, the first information and/or the second information is at least one piece of control information, response information, measurement reporting information, triggering information, request information and acknowledgement information.

In the embodiments of this disclosure, the control information and/or the response information include(s) the identifier and/or the sequence of the repeater.

In the embodiments of this disclosure, the control information is RRC control signaling or an MAC CE or DCI.

In the embodiments of this disclosure, the first information and/or the second information, such as the control information, is/are repeater-specific or group common to the repeater or cell-specific or network-device-specific.

For example, the group common to the repeater refers to being common to one or more repeaters within a cell, which may be common to a part of or all repeaters within the cell.

In the embodiments of this disclosure, the repeater-specific refers to that only one repeater in the network or under the same network device may receive or decode or interpret information.

In the embodiments of this disclosure, the group common to the repeater refers to that multiple repeaters in the network or under the same network device may receive or decode or interpret information, but it is not ruled out that there is only one repeater.

In the embodiments of this disclosure, the identifiers and/or sequences used in different processing in (1)-(5) are different identifiers and/or sequences, or different parts in one identifier and/or sequence.

In the embodiments of this disclosure, the cell identifier is a part of the identifier and/or the sequence of the repeater; or, the cell identifier is not a part of the identifier and/or the sequence of the repeater.

Following description shall be given by taking that a physical channel carries the control information as an example.

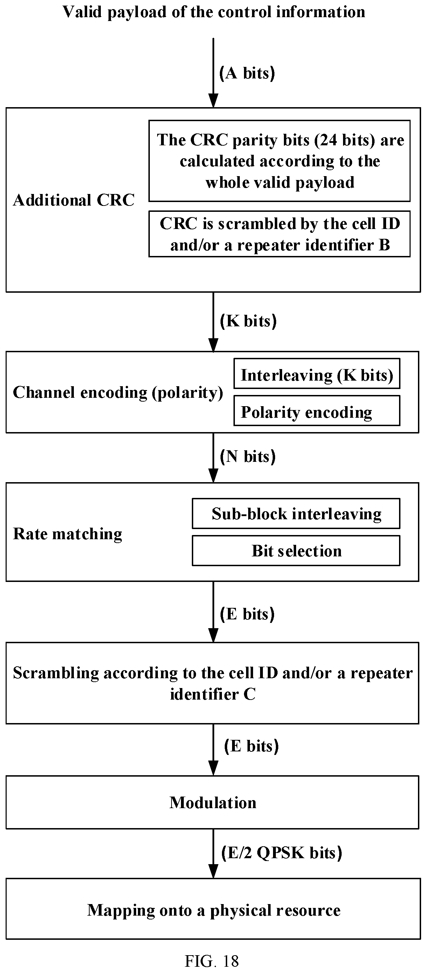

FIG. 18 is a schematic diagram of a process for carrying control information by a physical channel of Embodiment 1 of this disclosure. As shown in FIG. 18, input is a control information payload, which may or may not include a repeater identifier A. CRC attachment is first made to the control information payload, wherein CRC is scrambled by the cell ID and/or a repeater identifier B; then, channel coding is performed; next, rate matching is performed; thereafter, scrambling is performed according to the cell ID and/or a repeater identifier C; and finally, modulation and mapping onto physical resources are performed.

It can be seen from the above embodiment that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

### Embodiment 2

Embodiment 2 of this disclosure provides a method for communication between a network device and a repeater, applicable to a network device side. This method corresponds to the method for communication between a network device and a repeater applicable to a repeater side in Embodiment 1, with identical contents being not going to be described herein any further.

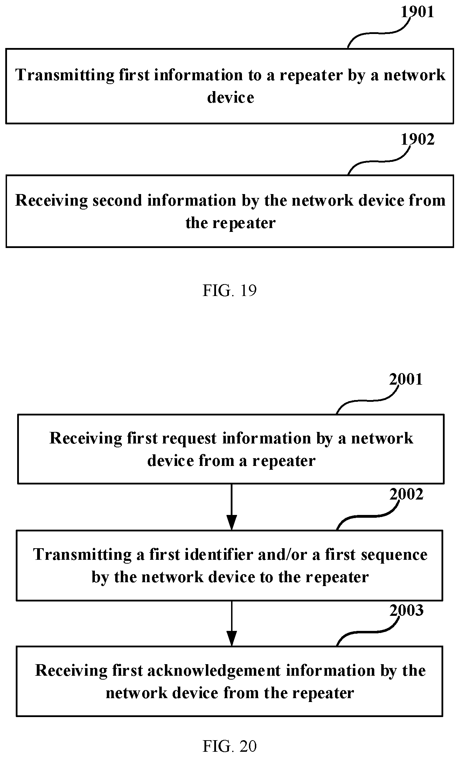

FIG. 19 is a schematic diagram of the method for communication between a network device and a repeater of Embodiment 2 of this disclosure. As shown in FIG. 19, the method includes:
step 1901: transmitting first information to a repeater by a network device; and/or,
step 1902: receiving second information by the network device from the repeater,
wherein the repeater is identified by an identifier and/or a sequence.

In the embodiments of this disclosure, the method may include at least one of steps 1901 and 1902. Additionally, when the method includes steps 1901 and 1902, an order of execution of steps 1901 and 1902 is not restricted. Furthermore, steps 1901 and 1902 may be associated, or may not be associated.

In the embodiments of this disclosure, the identifier and/or sequence include(s) one or more identifiers and/or sequences.

In the embodiments of this disclosure, the identifier and/or sequence may include at least one of a preconfigured identifier and/or sequence, a predefined identifier and/or sequence and an identifier and/or sequence configured or indicated via signaling.

In the embodiments of this disclosure, the identifier and/or the sequence include(s) at least one of the following identifiers and/or sequences: a unique identifier and/or sequence under a network device (or cell); a unique identifier and/or sequence within a network; and a preset identifier and/or sequence.

In the embodiments of this disclosure, the identifier includes a network device identifier and/or a terminal equipment identifier.

The identifier and/or the sequence is targeted to at least one of a physical layer, an MAC layer and an RRC layer.

In the embodiments of this disclosure, the identifier and/or sequence may be provided by the network device to the repeater, or may be acquired by the network device from the repeater.

FIG. 20 is a schematic diagram of a method for providing the identifier and/or the sequence by the network device to the repeater of Embodiment 2 of this disclosure. As shown in FIG. 20, the method includes:
step 2001: receiving first request information by a network device from a repeater;
step 2002: transmitting a first identifier and/or a first sequence by the network device to the repeater; and
step 2003: receiving first acknowledgement information by the network device from the repeater.

In the embodiments of this disclosure, step 2003 is optional.

Reference may be made to the contents in FIG. 7 and FIG. 8 in Embodiment 1 for contents of the above steps, which shall not be repeated herein any further.

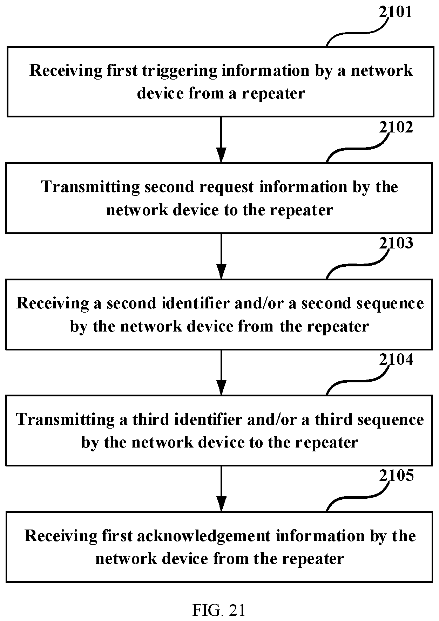

FIG. 21 is a schematic diagram of another method for providing the identifier and/or the sequence by the network device to the repeater of Embodiment 2 of this disclosure. As shown in FIG. 21, the method includes:
step 2101: receiving first triggering information by a network device from a repeater;
step 2102: transmitting second request information by the network device to the repeater;
step 2103: receiving a second identifier and/or a second sequence by the network device from the repeater;
step 2104: transmitting a third identifier and/or a third sequence by the network device to the repeater; and
step 2105: receiving first acknowledgement information by the network device from the repeater.

In the embodiments of this disclosure, step 2105 is optional.

Reference may be made to the contents in FIG. 9 and FIG. 10 in Embodiment 1 for contents of the above steps, which shall not be repeated herein any further.

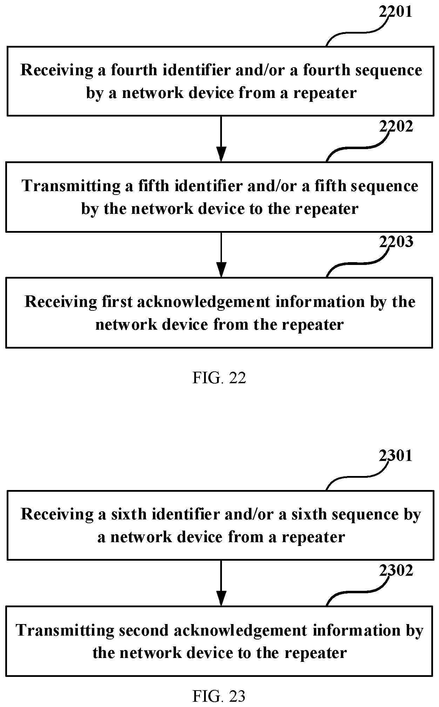

FIG. 22 is a schematic diagram of a further method for providing the identifier and/or the sequence by the network device to the repeater of Embodiment 2 of this disclosure. As shown in FIG. 22, the method includes:
step 2201: receiving a fourth identifier and/or a fourth sequence by a network device from a repeater;
step 2202: transmitting a fifth identifier and/or a fifth sequence by the network device to the repeater; and
step 2203: receiving first acknowledgement information by the network device from the repeater.

In the embodiments of this disclosure, step 2203 is optional.

Reference may be made to the contents in FIG. 11 and FIG. 12 in Embodiment 1 for contents of the above steps, which shall not be repeated herein any further.

FIG. 23 is a schematic diagram of a method for acquiring an identifier and/or a sequence by the network device from the repeater of Embodiment 2 of this disclosure. As shown in FIG. 23, the method includes:
step 2301: receiving a sixth identifier and/or a sixth sequence by a network device from a repeater; and
step 2302: transmitting second acknowledgement information by the network device to the repeater.

In the embodiments of this disclosure, step 2302 is optional.

Reference may be made to the contents in FIG. 13 and FIG. 14 in Embodiment 1 for contents of the above steps, which shall not be repeated herein any further.

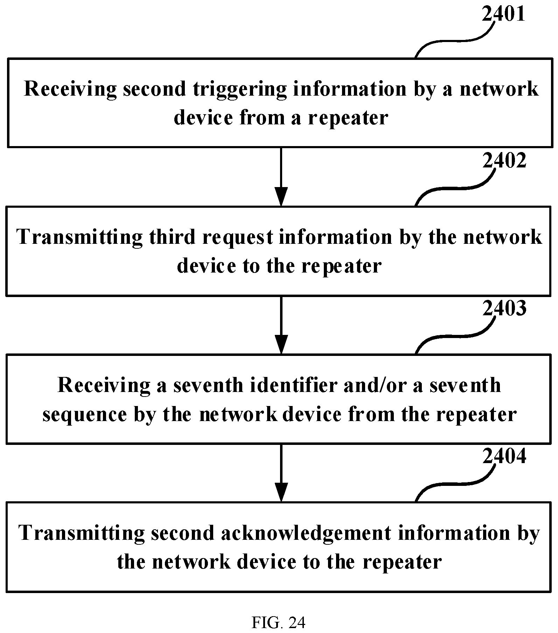

FIG. 24 is a schematic diagram of another method for acquiring an identifier and/or a sequence by the network device from the repeater of Embodiment 2 of this disclosure. As shown in FIG. 24, the method includes:
step 2401: receiving second triggering information by a network device from a repeater;
step 2402: transmitting third request information by the network device to the repeater;
step 2403: receiving a seventh identifier and/or a seventh sequence by the network device from the repeater; and
step 2404: transmitting second acknowledgement information by the network device to the repeater.

In the embodiments of this disclosure, step 2404 is optional.

Reference may be made to the contents in FIG. 15 and FIG. 16 in Embodiment 1 for contents of the above steps, which shall not be repeated herein any further.

In the embodiments of this disclosure, at least one of the first request information, the first triggering information, the fourth identifier and/or the fourth sequence, the sixth identifier and/or the sixth sequence and the second triggering information is a preamble or Msg A.

In the embodiments of this disclosure, at least one of the fourth identifier and/or the fourth sequence and the sixth identifier and/or the sixth sequence is carried by a PUSCH in the preamble or Msg A.

In the embodiments of this disclosure, at least one of the first identifier and/or the first sequence, the second request information, the fifth identifier and/or the fifth sequence and the second acknowledgement information is Msg.2 or an RAR or MsgB.

In the embodiments of this disclosure, at least one of the first acknowledgement information and the second acknowledgement information is ACK or NACK.

In the embodiments of this disclosure, the third identifier and/or the third sequence is/are Msg.4.

In the embodiments of this disclosure, contents included in the PUSCH of MsgA or the RAR or Msg B are defined for the repeater, or contents defined for the terminal equipment are reused.

In the embodiments of this disclosure, when the contents defined for the terminal equipment are reused, for the information received by the repeater, the repeater reads a part of information fields of the information and ignores the other information fields; and for the information transmitted by the repeater, the repeater fills a part of information fields with default bits (such as 0), and fills other information fields as needed.

In the embodiments of this disclosure, the first information is generated by the network device according to the identifier and/or the sequence of the repeater, and/or the first information is scrambled according to the identifier and/or the sequence of the repeater, and/or the first information is transmitted according to the identifier and/or the sequence of the repeater.

In the embodiments of this disclosure, the second information is generated according to the identifier and/or the sequence of the repeater, and/or the second information is scrambled according to the identifier and/or the sequence of the repeater, and/or the second information is received according to the identifier and/or the sequence of the repeater.

In the embodiments of this disclosure, the identifier and/or the sequence is/are used for at least one piece of the following processing:
scrambling of the first information and/or the second information carried by a physical channel;
generation and/or scrambling of a reference signal of a physical channel;
generation and/or scrambling of a sequence carrying information;
generation and/or scrambling of a preamble sequence/preamble sequences of the first information and/or the second information;
generation and/or scrambling of a preamble sequence of a channel or sequence for carrying the first information and/or the second information; and
instructing a repeater for which the first information and/or the second information is targeted in the first information and/or the second information or instructing a specific repeater for which a part of information in the first information and/or the second information is targeted in the first information and/or the second information.

In the embodiments of this disclosure, the scrambling of the first information and/or the second information carried by a physical channel includes: scrambling for CRC bits and/or scrambling of channel encoded bits.

In the embodiments of this disclosure, the generation and/or scrambling of a reference signal of a physical channel includes: generation and/or scrambling of the reference signal of the physical channel based on a cell ID and the identifier and/or the sequence of the repeater; or, generation of the reference signal of the physical channel based on a cell ID and scrambling of the reference signal of the physical channel based on the identifier and/or the sequence of the repeater; or, generation of the reference signal of the physical channel based on the identifier and/or the sequence of the repeater and scrambling of the reference signal of the physical channel based on a cell ID.

In the embodiments of this disclosure, the generation and/or scrambling of a sequence carrying information includes: generation and/or scrambling of the sequence carrying information based on the identifier and/or the sequence of the repeater and a beam ID of a terminal equipment side of the repeater.

In the embodiments of this disclosure, the generation and/or scrambling of a sequence carrying information includes: generation and/or scrambling of the sequence carrying information based on a cell ID, the identifier and/or the sequence of the repeater and a beam ID of a terminal equipment side of the repeater.

In the embodiments of this disclosure, the preamble sequence is used to indicate the repeater to which the first information and/or the second information is targeted.

In the embodiments of this disclosure, the preamble sequence is a DMRS sequence of the physical channel.

In the embodiments of this disclosure, the first information and/or the second information is at least one of control information, response information, measurement reporting information, triggering information, request information and acknowledgement information.

In the embodiments of this disclosure, the control information and/or the response information include(s) the identifier and/or the sequence of the repeater.

In the embodiments of this disclosure, the control information is RRC control signaling or an MAC CE or DCI.

In the embodiments of this disclosure, the first information and/or the second information, such as the control information, is/are repeater-specific or group common to the repeater or cell-specific or network-device-specific.

In the embodiments of this disclosure, the identifiers and/or sequences used in different processing are different identifiers and/or sequences, or different parts in one identifier and/or sequence.

In the embodiments of this disclosure, the cell identifier is a part of the identifier and/or the sequence of the repeater; or, the cell identifier is not a part of the identifier and/or the sequence of the repeater.

Reference may be made to the contents contained in Embodiment 1 for implementations of the above methods and contents related to the identifiers and/or the sequences, which shall not be described herein any further.

It can be seen from the above embodiment that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

### Embodiment 3

Embodiment 3 of this disclosure provides a device for communication between a network device and a repeater, provided in a repeater. As a principle of the device for solving problems is similar to that of the method in Embodiment 1, reference may be made to the implementation of the method described in Embodiment 1 for implementation of the device, with identical or related contents being not going to be described herein any further.

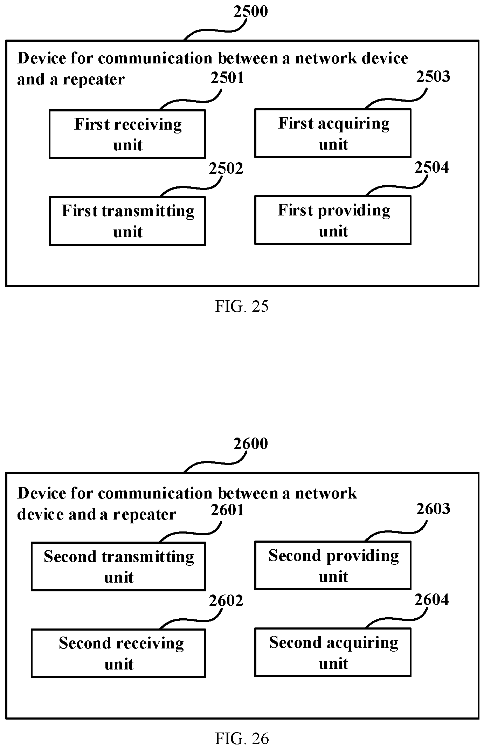

FIG. 25 is a schematic diagram of the device for communication between a network device and a repeater of Embodiment 3 of this disclosure. As shown in FIG. 25, a device 2500 for communication between a network device and a repeater includes:
a first receiving unit 2501 configured to receive first information from the network device; and/or,
a first transmitting unit 2502 configured to transmit second information to the network device,
wherein the repeater is identified by an identifier and/or a sequence.

In the embodiments of this disclosure, the device 2500 further includes:
a first acquiring unit 2503 configured to acquire the identifier and/or the sequence from the network device, and/or,
a first providing unit 2504 configured to provide the identifier and/or the sequence to the network device.

Reference may be made to contents of relevant steps in Embodiment 1 for functions and contents of the above units, which shall not be described herein any further.

It can be seen from the above embodiment that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

### Embodiment 4

Embodiment 4 of this disclosure provides a device for communication between a network device and a repeater, applicable to a network device side. As a principle of the device for solving problems is similar to that of the method in Embodiment 2, reference may be made to the implementation of the method described in Embodiment 2 for implementation of the device, with identical or related contents being not going to be described herein any further.

FIG. 26 is a schematic diagram of the device for communication between a network device and a repeater of Embodiment 4 of this disclosure. As shown in FIG. 26, a device 2600 for communication between a network device and a repeater includes:
a second transmitting unit 2601 configured to transmit first information to the repeater; and/or,
a second receiving unit 2602 configured to receive second information from the repeater,
wherein the repeater is identified by an identifier and/or a sequence.

In the embodiments of this disclosure, a device 2600 further includes:
a second providing unit 2603 configured to provide the identifier and/or the sequence to the repeater, and/or,
a second acquiring unit 2604 configured to acquire the identifier and/or the sequence from the repeater.

Reference may be made to contents of relevant steps in Embodiment 2 for functions and contents of the above units, which shall not be described herein any further.

It can be seen from the above embodiment that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

### Embodiment 5

The embodiment of this disclosure provides a repeater, including the device for communication between a network device and a repeater as described in Embodiment 3.

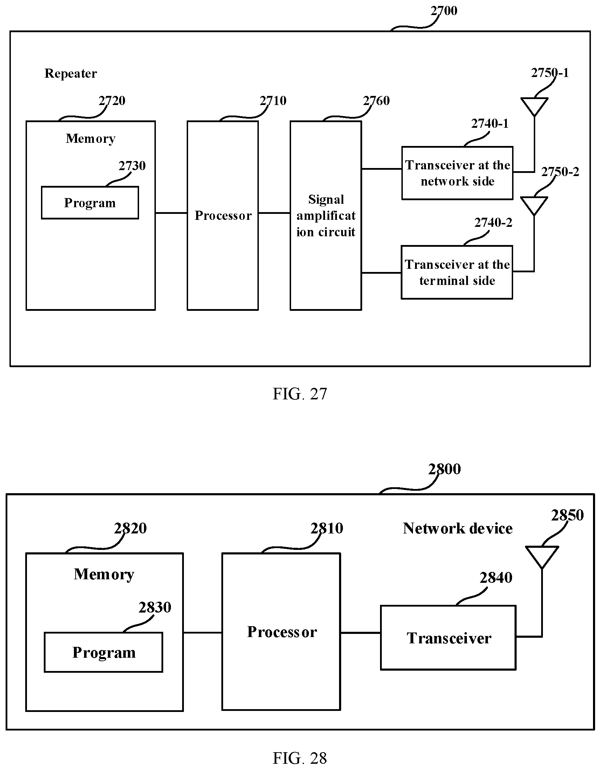

FIG. 27 is a block diagram of a systematic structure of repeater of Embodiment 5 of this disclosure. As shown in FIG. 27, a repeater 2700 may include a processor 2710 and a memory 2720, the memory 2720 being coupled to the processor 2710. It should be noted that this figure is illustrative only, and other types of structures may also be used, so as to supplement or replace this structure and achieve a telecommunications function or other functions.

In one implementation, the functions of the the device for communication between a network device and a repeater may be integrated into the processor 2710. Wherein, the processor 2710 may be configured to: receive first information from the network device; and/or, transmit second information to the network device, wherein the repeater is identified by an identifier and/or a sequence.

In another implementation, the device for communication between a network device and a repeater and the processor 2710 may be configured separately; for example, the device for communication between a network device and a repeater may be configured as a chip connected to the processor 2710, and the functions of the device for communication between a network device and a repeater are executed under control of the processor 2710.

As shown in FIG. 27, the repeater 2700 may further include a transceiver 2740-1 at the network side and an antenna 2750-1 at the network side, a transceiver 2740-2 at the terminal side and an antenna 2750-2 at the terminal side, and a signal amplification circuit 2760, etc. Wherein, functions of the above components are similar to those in the related art, and shall not be described herein any further. It should be noted that the repeater 2700 does not necessarily include all the parts shown in FIG. 27. Furthermore, the repeater 2700 may include parts not shown in FIG. 27, and the related art may be referred to.

As shown in FIG. 27, the processor 2710 is sometimes referred to as a controller or an operational control, which may include a microprocessor or other processor devices and/or logic devices. The processor 2710 receives input and controls operations of components of the repeater 2700.

Wherein, the memory 2720 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 2710 may execute programs stored in the memory 2720, so as to realize information storage or processing, etc. Functions of other parts are similar to those of the related art, which shall not be described herein any further.

The parts of the repeater 2700 may be realized by specific hardware, firmware, software, or any combination thereof, without departing from the scope of this disclosure.

It can be seen from the above embodiment that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

### Embodiment 6

The embodiment of this disclosure provides a network device, including the device for communication between a network device and a repeater as described in Embodiment 4.

FIG. 28 is a schematic diagram of a systematic structure of the network device of Embodiment 6 of this disclosure. As shown in FIG. 28, a network device 2800 may include a processor 2810 and a memory 2820, the memory 2820 being coupled to the processor 2810. Wherein, the memory 2820 may store various data, and furthermore, it may store a program 2830 for data processing, and execute the program 2830 under control of the processor 2810, so as to receive various information transmitted by a repeater, and transmit various information to the repeater.

In one implementation, the functions of the device for communication between a network device and a repeater may be integrated into the processor 2810. Wherein, the processor 2810 may be configured to: transmit first information to the repeater; and/or, receive second information from the repeater, wherein the repeater is identified by an identifier and/or a sequence.

Furthermore, as shown in FIG. 28, the network device 2800 may include a transceiver 2840, and an antenna 2850, etc. Wherein, functions of the above components are similar to those in the related art, and shall not be described herein any further. It should be noted that the network device 2800 does not necessarily include all the parts shown in FIG. 28. Furthermore, the network device 2800 may include parts not shown in FIG. 28, and the related art may be referred to.

It can be seen from the above embodiment that by making the repeater to have a communication function, receiving (including at least one of detecting a sequence, demodulating, descrambling, decoding and interpreting) information transmitted by the network device, and/or transmitting (including at least one of generating information, generating sequences, scrambling, encoding, modulating, mapping to time-frequency resources, etc.) information to the network device, by the repeater, is/are supported. Hence, on the one hand, adjusting the beam direction and/or width at the terminal side by the repeater according to an instruction of the base station may be supported. On the other hand, periodically or semi-persistently performing scanning or duplication on the beams at the terminal side by the repeater according to the instruction of the base station may be supported, thereby determining beams that able to match the terminal equipment, and/or supporting the terminal equipment to perform beam calibration. Thus, target signals may be amplified or enhanced as much as possible while reducing interference to other devices.

In addition, for scenarios where multiple repeaters are included in a network or under a network device or in a cell, the repeaters are identified by identifiers and/or sequences, which may support that information transmission and/or information reception between the network device and repeaters are specific to the repeaters or common to the multiple repeaters.

### Embodiment 7

The embodiment of this disclosure provides a communication system, including the repeater described in Embodiment 5 and/or the network device described in Embodiment 6.

For example, reference may be made to FIG. 1, FIG. 3, FIG. 4 and FIG. 5 for a structure of the communication system.

As shown in FIG. 1, the communication system 100 includes the network device101, the terminal equipment 102 and the repeater 103. The repeater 103 may be identical to the repeater described in Embodiment 5, and the network device 101 may be identical to the network device described in Embodiment 6, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 25 may either correspond to software modules of procedures of a computer program, or correspond to hardware modules. Such software modules may respectively correspond to the steps shown in FIG. 6. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 25 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 25 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to the implementations including the above embodiments, following supplements are further disclosed.

### First group of supplements

1. A device for communication between a network device and a repeater, the device including:
   a first receiving unit configured to receive first information from the network device; and/or,
   a first transmitting unit configured to transmit second information to the network device,
   wherein the repeater is identified by an identifier and/or a sequence.
2. The device according to supplement 1, wherein,
   the identifier and/or the sequence include(s) one or more identifiers and/or sequences.
3. The device according to supplement 1 or 2, wherein the identifier and/or the sequence include(s) at least one of the following identifiers and/or sequences:
   a preconfigured identifier and/or sequence;
   a predefined identifier and/or sequence; and
   an identifier and/or sequence configured via signaling.
4. The device according to any one of supplements 1-3, wherein the identifier and/or the sequence include(s) at least one of the following identifiers and/or sequences:
   a unique identifier and/or sequence under a network device;
   a unique identifier and/or sequence within a network; and
   a preset identifier and/or sequence.
5. The device according to any one of supplements 1-4, wherein,
   the identifier includes a network device identifier and/or a terminal equipment identifier.
6. The device according to any one of supplements 1-5, wherein,
   the identifier and/or the sequence is/are for at least one of a physical layer, an MAC layer and an RRC layer.
7. The device according to supplement 6, wherein,
   the entire or a part of the identifier and/or the sequence is/are used to support functions of at least one of the physical layer, the MAC layer and the RRC layer.
8. The device according to any one of supplements 1-7, wherein the device further includes:
   a first acquiring unit configured to acquire the identifier and/or the sequence from the network device.
9. The device according to supplement 8, wherein the first acquiring unit is used to:
   transmit first request information to the network device; and
   receive a first identifier and/or a first sequence from the network device.
10. The device according to supplement 8, wherein the first acquiring unit is used to:
   transmit first triggering information to the network device;
   receive second request information from the network device;
   transmit a second identifier and/or a second sequence to the network device; and
   receive a third identifier and/or a third sequence from the network device.
11. The device according to supplement 8, wherein the first acquiring unit is used to:
   transmit a fourth identifier and/or a fourth sequence to the network device; and
   receive a fifth identifier and/or a fifth sequence from the network device.
12. The device according to any one of supplements 9-11, wherein the first acquiring unit is further used to:
   transmit first acknowledgement information to the network device.
13. The device according to any one of supplements 1-7, wherein the device further includes:
   a first providing unit configured to provide the identifier and/or the sequence to the network device.
14. The device according to supplement 13, wherein the first providing unit is used to:
   transmit a sixth identifier and/or a sixth sequence to the network device.
15. The device according to supplement 13, wherein the first providing unit is used to:
   transmit second triggering information to the network device;
   receive third request information from the network device; and
   transmit a seventh identifier and/or a seventh sequence to the network device.
16. The device according to supplement 14 or 15, wherein the first providing unit is further used to:
   receive second acknowledgement information from the network device.
17. The device according to any one of supplements 9-11 and 14-15, wherein,
   at least one of the first request information, the first triggering information, the fourth identifier and/or the fourth sequence, the sixth identifier and/or the sixth sequence and the second triggering information is a preamble or Msg A.
18. The device according to supplement 11 or 14, wherein,
   at least one of the fourth identifier and/or the fourth sequence and the sixth identifier and/or the sixth sequence is carried by a PUSCH in the preamble or Msg A.
19. The device according to any one of supplements 9-11, 14 and 16, wherein,
   at least one of the first identifier and/or the first sequence, the second request information, the fifth identifier and/or the fifth sequence and the second acknowledgement information is Msg.2 or an RAR or Msg B.
20. The device according to supplement 12 or 16, wherein,
   at least one of the first acknowledgement information and the second acknowledgement information is ACK or NACK.
21. The device according to supplement 10, wherein,
   the third identifier and/or the third sequence is/are Msg.4.
22. The device according to any one of supplements 17-19, wherein,
   contents included in the PUSCH of MsgA or the RAR or Msg B are defined for the repeater, or contents defined for the terminal equipment are reused.
23. The device according to any one of supplements 1-22, wherein,
   the repeater reads a part of an information field of the first information; and/or
   the repeater fills a part of an information field of the second information with default bits.
23a. The device according to supplement 1, wherein,
   the first information and/or the second information is/are carried by a physical channel and/or sequence.
24. The device according to any one of supplements 1-23a, wherein,
   the first information is generated according to the identifier and/or the sequence of the repeater, and/or,
   the first information is scrambled according to the identifier and/or the sequence of the repeater, and/or,
   the first information is received according to the identifier and/or the sequence of the repeater.
25. The device according to any one of supplements 1-24, wherein,
   the second information is generated according to the identifier and/or the sequence of the repeater, and/or,
   the second information is scrambled according to the identifier and/or the sequence of the repeater,
   the second information is transmitted according to the identifier and/or the sequence of the repeater.
26. The device according to any one of supplements 1-25, wherein,
   the identifier and/or the sequence is/are used for at least one piece of the following processing:
   scrambling of the first information and/or the second information carried by a physical channel;
   generation and/or scrambling of a reference signal of a physical channel;
   generation and/or scrambling of a sequence carrying information;
   generation and/or scrambling of a preamble sequence/preamble sequences of the first information and/or the second information;
   generation and/or scrambling of a preamble sequence of a channel or sequence for carrying the first information and/or the second information; and
   indicating a repeater for which the first information and/or the second information is targeted in the first information and/or the second information or indicating a specific repeater for which a part of information in the first information and/or the second information is targeted in the first information and/or the second information.
27. The device according to supplement 26, wherein the scrambling of the first information and/or the second information carried by a physical channel includes:
   scrambling for CRC bits and/or scrambling of channel encoded bits.
28. The device according to supplement 26, wherein the generation and/or scrambling of a reference signal of a physical channel includes:
   generation and/or scrambling of the reference signal of the physical channel based on a cell ID and the identifier and/or the sequence of the repeater; or,
   generation of the reference signal of the physical channel based on a cell ID and scrambling of the reference signal of the physical channel based on the identifier and/or the sequence of the repeater; or,
   generation of the reference signal of the physical channel based on the identifier and/or the sequence of the repeater and scrambling of the reference signal of the physical channel based on a cell ID.
29. The device according to supplement 26, wherein the generation and/or scrambling of a sequence carrying information includes:
   generation and/or scrambling of the sequence carrying information based on the identifier and/or the sequence of the repeater and a beam ID of a terminal equipment side of the repeater.
30. The device according to supplement 26 or 29, wherein the generation and/or scrambling of a sequence carrying information includes:
   generation and/or scrambling of the sequence carrying information based on a cell ID, the identifier and/or the sequence of the repeater and a beam ID of a terminal equipment side of the repeater.
31. The device according to supplement 26, wherein,
   the preamble sequence is used to indicate the repeater to which the first information and/or the second information is/are directed.
32. The device according to supplement 31, wherein,
   the preamble sequence is a DMRS sequence of a physical channel.
33. The device according to any one of supplements 26-32, wherein,
   the first information and/or the second information is/are at least one of control information, response information, measurement reporting information, triggering information, request information and acknowledgement information.
34. The device according to supplement 33, wherein,
   the control information and/or the response information include(s) the identifier and/or the sequence of the repeater.
35. The device according to supplement 33, wherein,
   the control information is RRC control signaling or an MAC CE or DCI.
36. The device according to any one of supplements 1-35, wherein,
   the first information and/or the second information is/are repeater specific or group common to repeaters or cell specific or network device specific.
37. The device according to any one of supplements 26-36, wherein,
   the identifiers and/or sequences used in different processing are different identifiers and/or sequences, or different parts in one identifier and/or sequence.
38. The device according to any one of supplements 26-37, wherein,
   the cell identifier is a part of the identifier and/or the sequence of the repeater; or, the cell identifier is not a part of the identifier and/or the sequence of the repeater.
39. A repeater, including the device as described in any one of supplements 1-38.

### Second group of supplements

1. A device for communication between a network device and a repeater, the device including:
   a second transmitting unit configured to transmit first information to the repeater; and/or,
   a second receiving unit configured to receive second information from the repeater,
   wherein the repeater is identified by an identifier and/or a sequence.
2. The device according to supplement 1, wherein,
   the identifier and/or the sequence include(s) one or more identifiers and/or sequences.
3. The device according to supplement 1 or 2, wherein the identifier and/or the sequence include(s) at least one of the following identifiers and/or sequences:
   a preconfigured identifier and/or sequence;
   a predefined identifier and/or sequence; and
   an identifier and/or sequence configured via signaling.
4. The device according to any one of supplements 1-3, wherein the identifier and/or the sequence include(s) at least one of the following identifiers and/or sequences:
   a unique identifier and/or sequence under a network device;
   a unique identifier and/or sequence within a network; and
   a preset identifier and/or sequence.
5. The device according to any one of supplements 1-4, wherein,
   the identifier includes a network device identifier and/or a terminal equipment identifier.
6. The device according to any one of supplements 1-5, wherein,
   the identifier and/or the sequence is/are for at least one of a physical layer, an MAC layer and an RRC layer.
7. The device according to supplement 6, wherein,
   the entire or a part of the identifier and/or the sequence is/are used to support functions of at least one of the physical layer, the MAC layer and the RRC layer.
8. The device according to any one of supplements 1-7, wherein the device further includes:
   a second providing unit configured to provide the identifier and/or the sequence to the repeater.
9. The device according to supplement 8, wherein the second providing unit is used to:
   receive first request information from the repeater; and
   transmit a first identifier and/or a first sequence to the repeater.
10. The device according to supplement 8, wherein the second providing unit is used to:
   receive first triggering information from the repeater;
   transmit second request information to the repeater;
   receive a second identifier and/or a second sequence from the repeater; and
   transmit a third identifier and/or a third sequence to the repeater.
11. The device according to supplement 8, wherein the second providing unit is used to:
   receive a fourth identifier and/or a fourth sequence from the repeater; and
   transmit a fifth identifier and/or a fifth sequence to the repeater.
12. The device according to any one of supplements 9-11, wherein the second providing unit is further used to:
   receive first acknowledgement information from the repeater.
13. The device according to any one of supplements 1-7, wherein the device further includes:
   a second acquiring unit configured to acquire the identifier and/or the sequence from the repeater.
14. The device according to supplement 13, wherein the second acquiring unit is used to:
   receive a sixth identifier and/or a sixth sequence from the repeater.
15. The device according to supplement 13, wherein the second acquiring unit is used to:
   receive second triggering information from the repeater;
   transmit third request information to the repeater; and
   receive a seventh identifier and/or a seventh sequence from the repeater.
16. The device according to supplement 14 or 15, wherein the second acquiring unit is further used to:
   transmit second acknowledgement information to the repeater.
17. The device according to any one of supplements 9-11 and 14-15, wherein,
   at least one of the first request information, the first triggering information, the fourth identifier and/or the fourth sequence, the sixth identifier and/or the sixth sequence and the second triggering information is a preamble or Msg A.
18. The device according to supplement 11 or 14, wherein,
   at least one of the fourth identifier and/or the fourth sequence and the sixth identifier and/or the sixth sequence is carried by a PUSCH in the preamble or Msg A.
19. The device according to any one of supplements 9-11, 14 and 16, wherein,
   at least one of the first identifier and/or the first sequence, the second request information, the fifth identifier and/or the fifth sequence and the second acknowledgement information is Msg.2 or an RAR or Msg B.
20. The device according to supplement 12 or 16, wherein,
   at least one of the first acknowledgement information and the second acknowledgement information is ACK or NACK.
21. The device according to supplement 10, wherein,
   the third identifier and/or the third sequence is/are Msg.4.
22. The device according to any one of supplements 17-19, wherein,
   contents included in the PUSCH of Msg A or the RAR or Msg B are defined for the repeater, or contents defined for the terminal equipment are reused.
23. The device according to any one of supplements 1-22, wherein,
   the repeater reads a part of an information field of the first information; and/or
   the repeater fills a part of an information field of the second information with default bits.
23a. The device according to supplement 1, wherein,
   the first information and/or the second information is/are carried by a physical channel and/or sequence.
24. The device according to any one of supplements 1-23a, wherein,
   the first information is generated by the network device according to the identifier and/or the sequence of the repeater, and/or,
   the first information is scrambled according to the identifier and/or the sequence of the repeater, and/or,
   the first information is transmitted according to the identifier and/or the sequence
   of the repeater.
25. The device according to any one of supplements 1-24, wherein,
   the second information is generated according to the identifier and/or the sequence of the repeater, and/or,
   the second information is scrambled according to the identifier and/or the sequence of the repeater,
   the second information is received according to the identifier and/or the sequence of the repeater.
26. The device according to any one of supplements 1-25, wherein,
   the identifier and/or the sequence is/are used for at least one piece of the following processing:
   scrambling of the first information and/or the second information carried by a physical channel;
   generation and/or scrambling of a reference signal of a physical channel;
   generation and/or scrambling of a sequence carrying information;
   generation and/or scrambling of a preamble sequence/preamble sequences of the first information and/or the second information;
   generation and/or scrambling of a preamble sequence of a channel or sequence for carrying the first information and/or the second information; and
   indicating a repeater for which the first information and/or the second information is targeted in the first information and/or the second information or indicating a specific repeater for which a part of information in the first information and/or the second information is targeted in the first information and/or the second information.
27. The device according to supplement 26, wherein the scrambling of the first information and/or the second information carried by a physical channel includes:
   scrambling for CRC bits and/or scrambling of channel encoded bits.
28. The device according to supplement 26, wherein the generation and/or scrambling of a reference signal of a physical channel includes:
   generation and/or scrambling of the reference signal of the physical channel based on a cell ID and the identifier and/or the sequence of the repeater; or,
   generation of the reference signal of the physical channel based on a cell ID and scrambling of the reference signal of the physical channel based on the identifier and/or the sequence of the repeater; or,
   generation of the reference signal of the physical channel based on the identifier and/or the sequence of the repeater and scrambling of the reference signal of the physical channel based on a cell ID.
29. The device according to supplement 26, wherein the generation and/or scrambling of a sequence carrying information includes:
   generation and/or scrambling of the sequence carrying information based on the identifier and/or the sequence of the repeater and a beam ID of a terminal equipment side of the repeater.
30. The device according to supplement 26 or 29, wherein the generation and/or scrambling of a sequence carrying information includes:
   generation and/or scrambling of the sequence carrying information based on a cell ID, the identifier and/or the sequence of the repeater and a beam ID of a terminal equipment side of the repeater.
31. The device according to supplement 26, wherein,
   the preamble sequence is used to indicate the repeater to which the first information and/or the second information is/are directed.
32. The device according to supplement 31, wherein,
   the preamble sequence is a DMRS sequence of a physical channel.
33. The device according to supplements 26-32, wherein,
   the first information and/or the second information is/are at least one of control information, response information, measurement reporting information, triggering information, request information and acknowledgement information.
34. The device according to supplement 33, wherein,
   the control information and/or the response information include(s) the identifier and/or the sequence of the repeater.
35. The device according to supplement 33, wherein,
   the control information is RRC control signaling or an MAC CE or DCI.
36. The device according to any one of supplements 1-35, wherein,
   the first information and/or the second information is/are repeater specific or group common to repeaters or cell specific or network device specific.
37. The device according to any one of supplements 26-36, wherein,
   the identifiers and/or sequences used in different processing are different identifiers and/or sequences, or different parts in one identifier and/or sequence.
38. The device according to any one of supplements 26-37, wherein,
   the cell identifier is a part of the identifier and/or the sequence of the repeater; or, the cell identifier is not a part of the identifier and/or the sequence of the repeater.
39. A network device, including the device as described in any one of supplements 1-38.

### Third group of supplements

1. A method for communication between a network device and a repeater, the method including:
   receiving first information by the repeater from the network device; and/or,
   transmitting second information by the repeater to the network device,
   wherein the repeater is identified by an identifier and/or a sequence.
2. The method according to supplement 1, wherein,
   the identifier and/or the sequence include(s) one or more identifiers and/or sequences.
3. The method according to supplement 1 or 2, wherein the identifier and/or the sequence include(s) at least one of the following identifiers and/or sequences:
   a preconfigured identifier and/or sequence;
   a predefined identifier and/or sequence; and
   an identifier and/or sequence configured via signaling.
4. The method according to any one of supplements 1-3, wherein the identifier and/or the sequence include(s) at least one of the following identifiers and/or sequences:
   a unique identifier and/or sequence under a network device;
   a unique identifier and/or sequence within a network; and
   a preset identifier and/or sequence.
5. The method according to any one of supplements 1-4, wherein,
   the identifier includes a network device identifier and/or a terminal equipment identifier.
6. The method according to any one of supplements 1-5, wherein,
   the identifier and/or the sequence is/are for at least one of a physical layer, an MAC layer and an RRC layer.
7. The method according to supplement 6, wherein,
   the entire or a part of the identifier and/or the sequence is/are used to support functions of at least one of the physical layer, the MAC layer and the RRC layer.
8. The method according to any one of supplements 1-7, wherein the method further includes:
   acquiring the identifier and/or the sequence by the repeater from the network device.
9. The method according to supplement 8, wherein the acquiring the identifier and/or the sequence by the repeater from the network device includes:
   transmitting first request information by the repeater to the network device; and
   receiving a first identifier and/or a first sequence by the repeater from the network device.
10. The method according to supplement 8, wherein the acquiring the identifier and/or the sequence by the repeater from the network device includes:
   transmitting first triggering information by the repeater to the network device;
   receiving second request information by the repeater from the network device;
   transmitting a second identifier and/or a second sequence by the repeater to the network device; and
   receiving a third identifier and/or a third sequence by the repeater from the network device.
11. The method according to supplement 8, wherein the acquiring the identifier and/or the sequence by the repeater from the network device includes:
   transmitting a fourth identifier and/or a fourth sequence by the repeater to the network device; and
   receiving a fifth identifier and/or a fifth sequence by the repeater from the network device.
12. The method according to any one of supplements 9-11, wherein the acquiring the identifier and/or the sequence by the repeater from the network device further includes:
   transmitting first acknowledgement information by the repeater to the network device.
13. The method according to any one of supplements 1-7, wherein the method further includes:
   providing the identifier and/or the sequence by the repeater to the network device.
14. The method according to supplement 13, wherein the providing the identifier and/or the sequence by the repeater to the network device includes:
   transmitting a sixth identifier and/or a sixth sequence by the repeater to the network device.
15. The method according to supplement 13, wherein the providing the identifier and/or the sequence by the repeater to the network device includes:
   transmitting second triggering information by the repeater to the network device;
   receiving third request information by the repeater from the network device; and
   transmitting a seventh identifier and/or a seventh sequence by the repeater to the network device.
16. The method according to supplement 14 or 15, wherein the providing the identifier and/or the sequence by the repeater to the network device further includes:
   receiving second acknowledgement information by the repeater from the network device.
17. The method according to any one of supplements 9-11 and 14-15, wherein,
   at least one of the first request information, the first triggering information, the fourth identifier and/or the fourth sequence, the sixth identifier and/or the sixth sequence and the second triggering information is a preamble or Msg A.
18. The method according to supplement 11 or 14, wherein,
   at least one of the fourth identifier and/or the fourth sequence and the sixth identifier and/or the sixth sequence is carried by a PUSCH in the preamble or Msg A.
19. The method according to any one of supplements 9-11, 14 and 16, wherein,
   at least one of the first identifier and/or the first sequence, the second request information, the fifth identifier and/or the fifth sequence and the second acknowledgement information is Msg.2 or an RAR or MsgB.
20. The method according to supplement 12 or 16, wherein,
   at least one of the first acknowledgement information and the second acknowledgement information is ACK or NACK.
21. The method according to supplement 10, wherein,
   the third identifier and/or the third sequence is/are Msg.4.
22. The method according to any one of supplements 17-19, wherein,
   contents included in the PUSCH of Msg A or the RAR or Msg B are defined for the repeater, or contents defined for the terminal equipment are reused.
23. The method according to any one of supplements 1-22, wherein,
   the repeater reads a part of an information field of the first information; and/or
   the repeater fills a part of an information field of the second information with default bits.
23a. The method according to supplement 1, wherein,
   the first information and/or the second information is/are carried by a physical channel and/or sequence.
24. The method according to any one of supplements 1-23a, wherein,
   the first information is generated according to the identifier and/or the sequence of the repeater, and/or,
   the first information is scrambled according to the identifier and/or the sequence of the repeater, and/or,
   the first information is received according to the identifier and/or the sequence of the repeater.
25. The method according to any one of supplements 1-24, wherein,
   the second information is generated according to the identifier and/or the sequence of the repeater, and/or,
   the second information is scrambled according to the identifier and/or the sequence of the repeater,
   the second information is transmitted according to the identifier and/or the sequence of the repeater.
26. The method according to any one of supplements 1-25, wherein,
   the identifier and/or the sequence is/are used for at least one piece of the following processing:
   scrambling of the first information and/or the second information carried by a physical channel;
   generation and/or scrambling of a reference signal of a physical channel;
   generation and/or scrambling of a sequence carrying information;
   generation and/or scrambling of a preamble sequence/preamble sequences of the first information and/or the second information;
   generation and/or scrambling of a preamble sequence of a channel or sequence for carrying the first information and/or the second information; and
   indicating a repeater for which the first information and/or the second information is targeted in the first information and/or the second information or indicating a specific repeater for which a part of information in the first information and/or the second information is targeted in the first information and/or the second information.
27. The method according to supplement 26, wherein the scrambling of the first information and/or the second information carried by a physical channel includes:
   scrambling for CRC bits and/or scrambling of channel encoded bits.
28. The method according to supplement 26, wherein the generation and/or scrambling of a reference signal of a physical channel includes:
   generation and/or scrambling of the reference signal of the physical channel based on a cell ID and the identifier and/or the sequence of the repeater; or,
   generation of the reference signal of the physical channel based on a cell ID and scrambling of the reference signal of the physical channel based on the identifier and/or the sequence of the repeater; or,
   generation of the reference signal of the physical channel based on the identifier and/or the sequence of the repeater and scrambling of the reference signal of the physical channel based on a cell ID.
29. The method according to supplement 26, wherein the generation and/or scrambling of a sequence carrying information includes:
   generation and/or scrambling of the sequence carrying information based on the identifier and/or the sequence of the repeater and a beam ID of a terminal equipment side of the repeater.
30. The method according to supplement 26 or 29, wherein the generation and/or scrambling of a sequence carrying information includes:
   generation and/or scrambling of the sequence carrying information based on a cell ID, the identifier and/or the sequence of the repeater and a beam ID of a terminal equipment side of the repeater.
31. The method according to supplement 26, wherein,
   the preamble sequence is used to indicate the repeater to which the first information and/or the second information is/are directed.
32. The method according to supplement 31, wherein,
   the preamble sequence is a DMRS sequence of a physical channel.
33. The method according to supplements 26-32, wherein,
   the first information and/or the second information is/are at least one of control information, response information, measurement reporting information, triggering information, request information and acknowledgement information.
34. The method according to supplement 33, wherein,
   the control information and/or the response information include(s) the identifier and/or the sequence of the repeater.
35. The method according to supplement 33, wherein,
   the control information is RRC control signaling or an MAC CE or DCI.
36. The method according to any one of supplements 1-35, wherein,
   the first information and/or the second information is/are repeater specific or group common to repeaters or cell specific or network device specific.
37. The method according to any one of supplements 26-36, wherein,
   the identifiers and/or sequences used in different processing are different identifiers and/or sequences, or different parts in one identifier and/or sequence.
38. The method according to any one of supplements 26-37, wherein,
   the cell identifier is a part of the identifier and/or the sequence of the repeater; or, the cell identifier is not a part of the identifier and/or the sequence of the repeater.

### Fourth group of supplements

1. A method for communication between a network device and a repeater, the method including:
   transmitting first information by the network device to the repeater; and/or,
   receiving second information by the network device from the repeater,
   wherein the repeater is identified by an identifier and/or a sequence.
2. The method according to supplement 1, wherein,
   the identifier and/or the sequence include(s) one or more identifiers and/or sequences.
3. The method according to supplement 1 or 2, wherein the identifier and/or the sequence include(s) at least one of the following identifiers and/or sequences:
   a preconfigured identifier and/or sequence;
   a predefined identifier and/or sequence; and
   an identifier and/or sequence configured via signaling.
4. The method according to any one of supplements 1-3, wherein the identifier and/or the sequence include(s) at least one of the following identifiers and/or sequences:
   a unique identifier and/or sequence under a network device;
   a unique identifier and/or sequence within a network; and
   a preset identifier and/or sequence.
5. The method according to any one of supplements 1-4, wherein,
   the identifier includes a network device identifier and/or a terminal equipment identifier.
6. The method according to any one of supplements 1-5, wherein,
   the identifier and/or the sequence is/are for at least one of a physical layer, an MAC layer and an RRC layer.
7. The method according to supplement 6, wherein,
   the entire or a part of the identifier and/or the sequence is/are used to support functions of at least one of the physical layer, the MAC layer and the RRC layer.
8. The method according to any one of supplements 1-7, wherein the method further includes:
   providing the identifier and/or the sequence by the network device to the repeater.
9. The method according to supplement 8, wherein the providing the identifier and/or the sequence by the network device to the repeater includes:
   receiving first request information by the network device from the repeater; and
   transmitting a first identifier and/or a first sequence by the network device to the repeater.
10. The method according to supplement 8, wherein the providing the identifier and/or the sequence by the network device to the repeater includes:
   receiving first triggering information by the network device from the repeater;
   transmitting second request information by the network device to the repeater;
   receiving a second identifier and/or a second sequence by the network device from the repeater; and
   transmitting a third identifier and/or a third sequence by the network device to the repeater.
11. The method according to supplement 8, wherein the providing the identifier and/or the sequence by the network device to the repeater includes:
   receiving a fourth identifier and/or a fourth sequence by the network device from the repeater; and
   transmitting a fifth identifier and/or a fifth sequence by the network device to the repeater.
12. The method according to any one of supplements 9-11, wherein the providing the identifier and/or the sequence by the network device to the repeater further includes:
   receiving first acknowledgement information by the network device from the repeater.
13. The method according to any one of supplements 1-7, wherein the method further includes:
   acquiring the identifier and/or the sequence by the network device from the repeater.
14. The method according to supplement 13, wherein the acquiring the identifier and/or the sequence by the network device from the repeater includes:
   receiving a sixth identifier and/or a sixth sequence by the network device from the repeater.
15. The method according to supplement 13, wherein the acquiring the identifier and/or the sequence by the network device from the repeater includes:
   receiving second triggering information by the network device from the repeater;
   transmitting third request information by the network device to the repeater; and
   receiving a seventh identifier and/or a seventh sequence by the network device from the repeater.
16. The method according to supplement 14 or 15, wherein the acquiring the identifier and/or the sequence by the network device from the repeater further includes:
   transmitting second acknowledgement information by the network device to the repeater.
17. The method according to any one of supplements 9-11 and 14-15, wherein,
   at least one of the first request information, the first triggering information, the fourth identifier and/or the fourth sequence, the sixth identifier and/or the sixth sequence and the second triggering information is a preamble or Msg A.
18. The method according to supplement 11 or 14, wherein,
   at least one of the fourth identifier and/or the fourth sequence and the sixth identifier and/or the sixth sequence is carried by a PUSCH in the preamble or Msg A.
19. The method according to any one of supplements 9-11, 14 and 16, wherein,
   at least one of the first identifier and/or the first sequence, the second request information, the fifth identifier and/or the fifth sequence and the second acknowledgement information is Msg.2 or an RAR or MsgB.
20. The method according to supplement 12 or 16, wherein,
   at least one of the first acknowledgement information and the second acknowledgement information is ACK or NACK.
21. The method according to supplement 10, wherein,
   the third identifier and/or the third sequence is/are Msg.4.
22. The method according to any one of supplements 17-19, wherein,
   contents included in the PUSCH of MsgA or the RAR or Msg B are defined for the repeater, or contents defined for the terminal equipment are reused.
23. The method according to any one of supplements 1-22, wherein,
   the repeater reads a part of an information field of the first information; and/or
   the repeater fills a part of an information field of the second information with default bits.
23a. The method according to supplement 1, wherein,
   the first information and/or the second information is/are carried by a physical channel and/or sequence.
24. The method according to any one of supplements 1-23a, wherein,
   the first information is generated by the network device according to the identifier and/or the sequence of the repeater, and/or,
   the first information is scrambled according to the identifier and/or the sequence of the repeater, and/or,
   the first information is transmitted according to the identifier and/or the sequence of the repeater.
25. The method according to any one of supplements 1-24, wherein,
   the second information is generated according to the identifier and/or the sequence of the repeater, and/or,
   the second information is scrambled according to the identifier and/or the sequence of the repeater,
   the second information is received according to the identifier and/or the sequence of the repeater.
26. The method according to any one of supplements 1-25, wherein,
   the identifier and/or the sequence is/are used for at least one piece of the following processing:
   scrambling of the first information and/or the second information carried by a physical channel;
   generation and/or scrambling of a reference signal of a physical channel;
   generation and/or scrambling of a sequence carrying information;
   generation and/or scrambling of a preamble sequence/preamble sequences of the first information and/or the second information;
   generation and/or scrambling of a preamble sequence of a channel or sequence for carrying the first information and/or the second information; and
   indicating a repeater for which the first information and/or the second information is targeted in the first information and/or the second information or indicating a specific repeater for which a part of information in the first information and/or the second information is targeted in the first information and/or the second information.
27. The method according to supplement 26, wherein the scrambling of the first information and/or the second information carried by a physical channel includes:
   scrambling for CRC bits and/or scrambling of channel encoded bits.
28. The method according to supplement 26, wherein the generation and/or scrambling of a reference signal of a physical channel includes:
   generation and/or scrambling of the reference signal of the physical channel based on a cell ID and the identifier and/or the sequence of the repeater; or,
   generation of the reference signal of the physical channel based on a cell ID and scrambling of the reference signal of the physical channel based on the identifier and/or the sequence of the repeater; or,
   generation of the reference signal of the physical channel based on the identifier and/or the sequence of the repeater and scrambling of the reference signal of the physical channel based on a cell ID.
29. The method according to supplement 26, wherein the generation and/or scrambling of a sequence carrying information includes:
   generation and/or scrambling of the sequence carrying information based on the identifier and/or the sequence of the repeater and a beam ID of a terminal equipment side of the repeater.
30. The method according to supplement 26 or 29, wherein the generation and/or scrambling of a sequence carrying information includes:
   generation and/or scrambling of the sequence carrying information based on a cell ID, the identifier and/or the sequence of the repeater and a beam ID of a terminal equipment side of the repeater.
31. The method according to supplement 26, wherein,
   the preamble sequence is used to indicate the repeater to which the first information and/or the second information is/are directed.
32. The method according to supplement 31, wherein,
   the preamble sequence is a DMRS sequence of a physical channel.
33. The method according to supplements 26-32, wherein,
   the first information and/or the second information is/are at least one of control information, response information, measurement reporting information, triggering information, request information and acknowledgement information.
34. The method according to supplement 33, wherein,
   the control information and/or the response information include(s) the identifier and/or the sequence of the repeater.
35. The method according to supplement 33, wherein,
   the control information is RRC control signaling or an MAC CE or DCI.
36. The method according to any one of supplements 1-35, wherein,
   the first information and/or the second information is/are repeater specific or group common to repeaters or cell specific or network device specific.
37. The method according to any one of supplements 26-36, wherein,
   the identifiers and/or sequences used in different processing are different identifiers and/or sequences, or different parts in one identifier and/or sequence.
38. The method according to any one of supplements 26-37, wherein,
   the cell identifier is a part of the identifier and/or the sequence of the repeater; or, the cell identifier is not a part of the identifier and/or the sequence of the repeater.

## Claims

1. A device for communication between a network device and a repeater, the device comprising:
a first receiving unit configured to receive first information from the network device; and/or,
a first transmitting unit configured to transmit second information to the network device,
wherein the repeater is identified by an identifier and/or a sequence.

2. The device according to claim 1, wherein,
the identifier and/or the sequence comprise(s) one or more identifiers and/or sequences.

3. The device according to claim 1, wherein the identifier and/or the sequence comprise(s) at least one of the following identifiers and/or sequences:
a preconfigured identifier and/or sequence;
a predefined identifier and/or sequence; and
an identifier and/or sequence configured via signaling.

4. The device according to claim 1, wherein the identifier and/or the sequence comprise(s) at least one of the following identifiers and/or sequences:
a unique identifier and/or sequence under a network device;
a unique identifier and/or sequence within a network; and
a preset identifier and/or sequence.

5. The device according to claim 1, wherein,
the identifier and/or the sequence is/are for at least one of a physical layer, an MAC layer and an RRC layer.

6. The device according to claim 1, wherein the device further comprises:
a first acquiring unit configured to acquire the identifier and/or the sequence from the network device.

7. The device according to claim 1, wherein the device further comprises:
a first providing unit configured to provide the identifier and/or the sequence to the network device.

8. The device according to claim 1, wherein,
the repeater reads a part of an information field of the first information; and/or
the repeater fills a part of an information field of the second information with default bits.

9. The device according to claim 1, wherein,
the first information and/or the second information is/are carried by a physical channel and/or sequence.

10. The device according to claim 1, wherein,
the first information is generated according to the identifier and/or the sequence of the repeater, and/or,
the first information is scrambled according to the identifier and/or the sequence of the repeater, and/or,
the first information is received according to the identifier and/or the sequence of the repeater.

11. The device according to claim 1, wherein,
the second information is generated according to the identifier and/or the sequence of the repeater, and/or,
the second information is scrambled according to the identifier and/or the sequence of the repeater,
the second information is transmitted according to the identifier and/or the sequence of the repeater.

12. The device according to claim 1, wherein,
the identifier and/or the sequence is/are used for at least one piece of the following processing:
scrambling of the first information and/or the second information carried by a physical channel;
generation and/or scrambling of a reference signal of a physical channel;
generation and/or scrambling of a sequence carrying information;
generation and/or scrambling of a preamble sequence/preamble sequences of the first information and/or the second information;
generation and/or scrambling of a preamble sequence of a channel or sequence for carrying the first information and/or the second information; and
indicating a repeater for which the first information and/or the second information is targeted in the first information and/or the second information or indicating a specific repeater for which a part of information in the first information and/or the second information is targeted in the first information and/or the second information.

13. The device according to claim 12, wherein the scrambling of the first information and/or the second information carried by a physical channel comprises:
scrambling for CRC bits and/or scrambling of channel encoded bits.

14. The device according to claim 12, wherein the generation and/or scrambling of a reference signal of a physical channel comprises:
generation and/or scrambling of the reference signal of the physical channel based on a cell ID and the identifier and/or the sequence of the repeater; or,
generation of the reference signal of the physical channel based on a cell ID and scrambling of the reference signal of the physical channel based on the identifier and/or the sequence of the repeater; or,
generation of the reference signal of the physical channel based on the identifier and/or the sequence of the repeater and scrambling of the reference signal of the physical channel based on a cell ID.

15. The device according to claim 12, wherein the generation and/or scrambling of a sequence carrying information comprises:
generation and/or scrambling of the sequence carrying information based on the identifier and/or the sequence of the repeater and a beam ID of a terminal equipment side of the repeater.

16. The device according to claim 12, wherein the generation and/or scrambling of a sequence carrying information comprises:
generation and/or scrambling of the sequence carrying information based on a cell ID, the identifier and/or the sequence of the repeater and a beam ID of a terminal equipment side of the repeater.

17. The device according to claim 12, wherein,
the preamble sequence is used to indicate the repeater to which the first information and/or the second information is/are directed.

18. The device according to claim 1, wherein,
the first information and/or the second information is/are repeater specific or group common to repeaters or cell specific or network device specific.

19. A device for communication between a network device and a repeater, the device comprising:
a second transmitting unit configured to transmit first information to the repeater; and/or,
a second receiving unit configured to receive second information from the repeater,
wherein the repeater is identified by an identifier and/or a sequence.

20. A communication system, comprising a network device and/or a repeater,
the repeater comprising the device as claimed in claim 1,
and the network device comprising the device as claimed in claim 19.
